# EUROPEAN PATENT SPECIFICATION

(11) **EP 2 058 375 B1**
(45) Date of publication and mention of the grant of the patent: **19.08.2015**
(21) Application number: 08019552.2
(22) Date of filing: 07.11.2008
(51) Int. Cl.: C09C 3/10, C08F 20/30, C09D 11/326, C09D 17/00, C08F 220/56

(54) **Pigment composition, water-based pigment dispersion, method of producing water-based pigment dispersion, water-based ink for ink jet recording, and polymer compound**
Pigmentzusammensetzung, wasserbasierte Pigmentdispersion, Verfahren zur Herstellung einer wasserbasierten Pigmentdispersion, wasserbasierte Tinte für Tintenstrahlaufzeichnung und Polymerverbindung
Composition de pigment, dispersion de pigment à base d'eau, procédé de production de dispersion de pigment à base d'eau, encre à base d'eau pour enregistrement à jet d'encre, et composé de polymère

(30) Priority: 09.11.2007 JP 2007291974; 15.05.2008 JP 2008128827; 04.11.2008 JP 2008282761
(43) Date of publication of application: 13.05.2009
(73) Proprietor: FUJIFILM Corporation, Minato-ku Tokyo (JP)
(72) Inventor: Kato, Takahiro, Ashigarakami-gun Kanagawa (JP); Hosokawa, Takafumi, Ashigarakami-gun Kanagawa (JP); Sasada, Misato, Ashigarakami-gun Kanagawa (JP); Shibata, Naoya, Ashigarakami-gun Kanagawa (JP)
(74) Representative: Hoffmann Eitle

(56) References cited:
- EP-A- 0 750 224
- EP-A- 0 763 580
- WO-A2-03/058345
- GB-A- 2 270 319
- JP-A- 1 210 467
- JP-A- 2004 287 298
- JP-A- 2005 274 923
- JP-A- 2005 300 857
- US-A1- 2006 052 481

## Description

### Field of Invention

The present invention relates to a pigment composition having excellent dispersibility of pigment, an water-based pigment dispersion, a method for producing the water-based pigment dispersion, and an water-based ink composition for ink jet recording, and a polymer.

### Related Art

In recent years, there has been an increasing trend towards providing paint and ink (also simply referred to as "ink" hereinafter) in a water-based substance in response to an increasing need for, for example, resource protection, environmental preservation or improvement in operational stability. The properties desired for water-based paints and water-based inks are the properties of a pigment dispersion such as flowability, storage stability, gloss of film, clarity or coloring power, which are similar to those desired for an oil-based paint or an oil-based ink. The properties of a pigment dispersion are greatly dependent on the particle diameter of the pigment. In particular, for example, a pigment dispersion containing a pigment with a smaller particle diameter is desired for ink-jet inks.

However, most pigments do not offer a satisfactory quality when dispersed by an ordinary dispersing method since they are remarkably unsuitable with respect to water-based vehicles in terms of pigment dispersibility or the like.

In addition, it is generally known that a smaller particle diameter of pigment results in lower stability of dispersion.

The use of various kinds of additives such as a water-based pigment dispersing resin or a surfactant has hitherto been studied. However, a water-based paint or a water-based ink which is suitable with respect to each of the foregoing and is comparable with conventional high quality oil-based paints or oil-based inks, has not been obtained.

Examples of techniques which address the above issues include the use of a pigment composition containing, as a dispersant, an addition polymer formed of an α,β-ethylene addition polymerizable monomer having an aromatic ring group having 8 or more carbon atoms and another α,β-ethylene addition polymerizable monomer that is polymerizable with the former (for example, see Japanese Patent Application Laid-Open (JP-A) No. 01-210467).

Examples thereof further include the use of a water-based pigment dispersion-containing composition for preparing a water-based pigment ink for ink-jet recording, which contains a water-based pigment dispersion composed of an organic pigment, a specific acrylic copolymer (A), a basic substance and water, and a specific acrylic copolymer (B) which does not coat the organic pigment (for example, see JP-A No. 2007-51199).
GB 2 270 319 A discloses a pigment-dispersing agent obtained by polymerizing an addition- polymerizable monomer having an acidic functional group and at least one other addition-polymerizable monomer in the presence of, as polymerization initiator, a diazotization product prepared by diazotizing at least one compound selected from an anthraquinone derivative having an aromatic amino group, an acridone derivative having an aromatic amino group and an organic dyestuff having an aromatic amino group.
EP 0 750 224 A2 discloses substituted benzotriazole based UV absorbing monomers, and photographic elements containing UV absorbing polymers formed from them. The ultraviolet absorbing polymer comprises repeating units of a 2'-hydroxyphenyl benzotriazole with a 5- or 6-substituent selected from halogen, cyano, carboxy or sulfonyl, and a 4'-alkoxy group in which the alkylene portion of the alkoxy is linked, in sequence through a first optional bivalent linking group, then an oxygen, sulfur group or amino group, then a second optional bivalent linking group, to the polymer chain, provided that the 3'-position is unsubstituted and the 4'-sbustituent does not have any -NH-, -OH or -SH substituents.
US 2006/0052481 A1 discloses an ink set for use in ink-jet recording comprising at least 2 ink compositions the solid content concentrations of which are different by more than 2% by mass, wherein said at least 2 ink compositions each comprise an aqueous medium, a pigment and a dispersant for dispersing the pigment, and the dispersant is a block copolymer having an A segment that is a hydrophobic segment, a B segment that is an oxyethylene-structure-containing nonionic hydrophilic segment, and a C segment that is an ionic hydrophilic segment.
EP 0 763 580 A2 discloses a pigment composition comprising an aqueous pigment dispersing agent having a portion which has a high affinity with a pigment and which has at least one type selected from the group consisting of an organic dye, anthraquinone and acridone only at a terminal end or at both terminal ends of at least one aqueous polymer selected from an aqueous linear urethanic polymer and an aqueous linear acrylic polymer, and a pigment.
JP 2004-287298 A discloses a pigment dispersing liquid for a color resist and a photosensitive coloring composition containing at least, a pigment; a pigment dispersant comprising a copolymer containing a molecular structure in which at least a structural unit having a specified quaternary ammonium salt group in the side chain is linked with a structural unit having a specified ester structure, and further containing an acidic functional group and a polyester chain; an imide group-containing copolymer having a molecular structure in which at least a structural unit having a cyclic imide group of a specified structure, a structural unit having an acidic functional group and a structural unit having a photosetting functional group excluding the above cyclic imide group are linked together; and an organic solvent.

### SUMMARY

It is generally known that the stability of a dispersion is decreased by finely dispersing the pigment and decreasing the particle diameter thereof, and when attempting to obtain a fine pigment dispersion by using the dispersant described in JP-A Nos. 01-210467 or 2007-51199, the pigment dispersibility and the stability over time are not sufficiently satisfactory.

The present invention addresses the above issues, and provides a pigment composition excellent in stability over time, in which a pigment is finely dispersed. The invention further provides a water-based pigment dispersion excellent in stability over time, in which a pigment is finely dispersed, a method of producing the dispersion, and a water-based ink for ink-jet recording containing the dispersion. The present description further discloses a polymer compound.

Namely, a first aspect of the invention is a pigment composition comprising: a pigment and a dispersant, wherein the dispersant is a copolymer comprising a repeating unit (a) represented by the following Formula (1) and a repeating unit (b) having an ionic group: 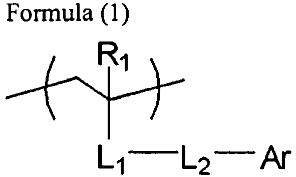 wherein, in Formula (1), R₁ represents a hydrogen atom or a methyl group; L₁ represents *-COO-, *-OCO-, *-CONH-, *-CONR₃-, or a substituted or unsubstituted phenylene group, where R₃ represents a hydrogen atom or an alkyl group having 1 to 6 carbon atoms; * represents a site which is linked to a main chain of the copolymer; L₂ represents a single bond, or a divalent linking group formed by combining one or more selected from the group consisting of an alkylene group having 1 to 12 carbon atoms, an alkenylene group having 2 to 12 carbon atoms, -CO-, -NR₇-, -O-, -S-, -SO- and -SO₂-, where R₇ represents a hydrogen atom or an alkyl group having 1 to 6 carbon atoms; and Ar represents a monovalent group formed by removing at least one atom from a condensed aromatic ring having 8 or more carbon atoms, a heterocycle having a condensed aromatic ring, or a structure having two or more connected benzene rings.

A second aspect of the invention is a water-based pigment dispersion comprising: the pigment composition of the first aspect of the invention; and water or a water-based carrier medium comprising water and an organic solvent.

A third aspect of the invention is a method for producing the water-based pigment dispersion of the second aspect of the invention comprising: mixing the dispersant, an organic solvent capable of dissolving the dispersant, and the water or the water-based carrier medium; and removing the organic solvent capable of dissolving the dispersant from the resultant of the mixing.

A fourth aspect of the invention is a method for producing a water-based pigment dispersion comprising adding, to the pigment composition of the first aspect of the invention, water or a water-based carrier medium comprising water and an organic solvent.

A fifth aspect of the invention is a water-based ink for ink jet recording comprising the water-based pigment dispersion of the second aspect of the invention.

A further aspect of the present disclosure is a polymer compound comprising, as copolymerization components, a monomer represented by the following Formula (3), (meth)acrylic acid, and benzyl (meth)acrylate:

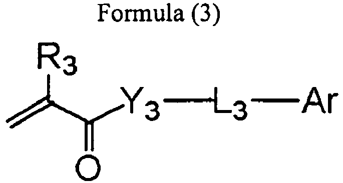

In Formula (3), R₃ represents a hydrogen atom or a methyl group; Y₃ represents an oxygen atom or -NR₄-; R₄ represents a hydrogen atom or a methyl group; L₃ represents a divalent linking group formed by combining two or more selected from the group consisting of an alkylene group having 1 to 12 carbon atoms, -CO-, -NR₇- and -O-, where R₇ is a hydrogen atom or an alkyl group having 1 to 6 carbon atoms; and Ar represents a monovalent group formed by removing at least one atom from naphthalene, biphenyl, acridone, fluorene, anthracene, phenanthrene or carbazole.

### DETAILED DESCRIPTION OF THE INVENTION

A pigment composition of the invention contains pigment and a dispersant, and the dispersant is a copolymer containing (a) a repeating unit represented by the following formula (1) and a repeating unit (b) having an ionic group.

The use of the dispersant allows a pigment composition excellent in stability over time, in which pigment is finely dispersed.

### Pigment

Known pigment may be used as pigment in the invention without particular limitation. Above all, pigment nearly insoluble or hardly soluble in water is preferable from the viewpoint of ink colorability and light resistance.

The pigment that may be used in the invention is not particularly limited in its kind, and any one of the conventional organic and inorganic pigments may be used. Examples of the pigment include polycyclic pigments such as azo lake, azo pigment, phthalocyanine pigment, perylene pigment, perynone pigment, anthraquinone pigment, quinacridone pigment, dioxadine pigment, diketopyrrolopyrrole pigment, thioindigo pigment, isoindoline pigment or quinophthalone pigment; dye lakes such as basic dye lake or acidic dye lake; organic pigments such as nitro pigment, nitroso pigment, aniline black or daylight fluorescent pigment; and inorganic pigments such as titanium oxide, iron oxides or carbon blacks. Even pigments that are not described in Color Index can be used as long as it is a pigment capable of being dispersed in an aqueous phase. Further, those obtained by surface treating the above-described pigments with a surfactant, a polymeric dispersant or the like, and grafted carbon can also be used. Of the above pigments, organic pigments and carbon black pigments are preferably used in view of improving ink colorability, light resistance, weathering resistance and water resistance.

Specific examples of the organic pigment used in the invention are described below.

Examples of the organic pigment for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 151, C.I. Pigment Yellow 155, C.I. Pigment Yellow 180 and C.I. Pigment Yellow 185.

Examples of the organic pigment for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 222 and C.I. Pigment Violet 19.

Examples of the organic pigment for green or cyan include C.I. Pigment Blue 15, C.I. Pigment Blue 15:2, C.I. Pigment Blue 15:3, C.I. Pigment Blue 15:4, C.I. Pigment Blue 16, C.I. Pigment Blue 60, C.I. Pigment Green 7, and siloxane-crosslinked aluminum phthalocyanine described in US Patent 4,311,775.

Examples of the organic pigment for black include C.I. Pigment Black 1, C.I. Pigment Black 6 and C.I. Pigment Black 7.

The pigment can be used singly or in a combination of two or more in the invention.

### Dispersant

The pigment composition of the invention contains a dispersant for dispersing pigment.

The dispersant is a copolymer containing at least, as copolymerization units, a repeating unit (a) having a specific structure and a repeating unit (b) having an ionic group.

### Repeating unit (a)

The repeating unit (a) is represented by the following Formula (1).

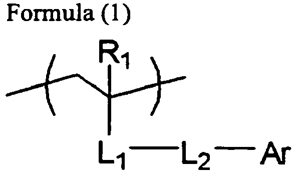

In Formula (1), R₁ represents a hydrogen atom or a methyl group.

In Formula (1), L₁ represents *-COO-, *-OCO-, *-CONH-, *-CONR₃-, or a substituted or unsubstituted phenylene group, where R₃ represents a hydrogen atom or an alkyl group having 1 to 6 carbon atoms. * represents a site which is linked to a main chain of the copolymer. L₁ is preferably -COO-, -CONH- or -CONCH₃-, and is more preferably -COO-.

In Formula (1), R₁ represents a hydrogen atom or a methyl group.

In Formula (1), L₂ represents a single bond, or a divalent linking group formed by combining one or more selected from the group consisting of an alkylene group having 1 to 12 carbon atoms, an alkenylene group having 2 to 12 carbon atoms, -CO-, -NR₇-, -O-, -S-, -SO- and -SO₂-, where R₇ represents a hydrogen atom or an alkyl group having 1 to 6 carbon atoms.

When L₂ selected from the group of the linking groups is used by combining plural kinds of divalent linking groups, the divalent linking groups may be the same or different.

The alkylene group preferably has 1 to 12 carbon atoms, and more preferably has 2 to 6 carbon atoms.

The alkenylene group preferably has 2 to 12 carbon atoms, and more preferably has 2 to 4 carbon atoms.

The alkylene group and the alkenylene group may each independently have a substituent (such as an alkyl group having 1 to 6 carbon atoms, a halogen atom, a cyano group or an alkoxy group having 1 to 6 carbon atoms) when it has a structure capable of having a substituent.

L₂ is preferably a single bond or a divalent linking group containing an alkylene group, -O-, -CO- or -NR₇-, where R₇ is a hydrogen atom or an alkyl group having 1 to 6 carbon atoms, and is more preferably a divalent linking group containing an alkylene group, -O- or -CO-.

In Formula (1), Ar represents a monovalent group formed by removing at least one atom from an condensed aromatic ring having 8 or more carbon atoms, a heterocycle having a condensed aromatic ring, or a structure having two or more connected benzene rings.

The "condensed aromatic ring having 8 or more carbon atoms" is an aromatic ring which has 8 or more carbon atoms and which has either an aromatic ring structure in which two or more benzene rings are condensed or a ring structure in which at least one aromatic ring and an alicyclic hydrocarbon condensed to the aromatic ring. Specific examples thereof include naphthalene, anthracene, fluorene, phenanthrene and acenaphthene.

The position in the monovalent group represented by Ar from which the atom is removed is not particularly limited.

The "heterocycle having a condensed aromatic ring" is a compound in which an aromatic compound containing no hetero atom (preferably a benzene ring) and a cyclic compound having a hetero atom are condensed. The cyclic compound having a hetero atom is preferably a five-membered ring or a six-membered ring. The hetero atom is preferably a nitrogen atom, an oxygen atom or a sulfur atom. The cyclic compound having a hetero atom may have plural hetero atoms, in which the kinds of the hetero atoms may be the same or different. Specific examples of the heterocycle having a condensed aromatic ring include phthalimide, naphthalimide, acridone, carbazole, benzoxazole and benzothiazole.

The "structure having two or more connected benzene rings" is structure in which two or more benzene rings are bonded by a single bond, a divalent linking group or a trivalent linking group. The divalent linking group is preferably a divalent linking group selected from the group consisting of an alkylene group having 1 to 4 carbon atoms, -CO-, -O-, -S-, -SO-, -SO₂- and a combination of any of these. Examples of the trivalent linking group include a methine group. Here, the benzene rings may be bonded by plural linking groups, and the kinds of the plural linking groups may be the same or different. The number of the benzene rings is preferably 2 to 6, and is more preferably 2 to 3. Specific examples of the structure having two or more connected benzene rings include biphenyl, triphenylmethane, diphenylmethane, diphenyl ether and diphenyl sulfone.

Ar is preferably a monovalent group formed by removing at least one atom from naphthalene, biphenyl, triphenylmethane, phthalimide, naphthalimide, acridone, fluorene, anthracene, phenanthrene, diphenylmethane or carbazole, and is more preferably monovalent group formed by removing at least one atom from a monovalent group having naphthalene, biphenyl, phthalimide, naphthalimide or acridone.

Ar may have a substituent. Examples of the substituent include an alkyl group, an alkoxyl group, an alkylcarbonyl group, an alkylcarbonyloxy group, an alkyloxycarbonyloxy group, a halogen group and a cyano group, and more preferable examples of the substituent include an alkyl group having 1 to 10 carbon atoms, an alkoxyl group having 1 to 10 carbon atoms, an alkylcarbonyl group having 1 to 10 carbon atoms, an alkylcarbonyloxy group having 1 to 10 carbon atoms, a chloro group and a cyano group.

These substituents may be substituted with other substituents, and preferable examples of the other substituents are the same as the substituent of Ar.

When Ar has two or more substituents, the kinds of the substituents may be the same or different. If possible, the substituents may bond together to form a ring.

A copolymer having a repeating unit (a) represented by Formula (1) may be formed by introducing a corresponding functional group via a polymer reaction after obtaining a main structure of the copolymer, while it is preferably formed by polymerizing a corresponding monomer represented by the following Formula (4).

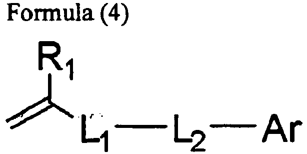

In Formula (4), R₁, L₁, L₂ and Ar represent the same as the counterparts in Formula (1), and preferable examples thereof are also the same. The monomer represented by

Formula (4) may be used singly or by mixture of two or more kinds thereof.

Specific examples of the monomer represented by Formula (4) are shown below, while the invention is not limited to the following specific examples.

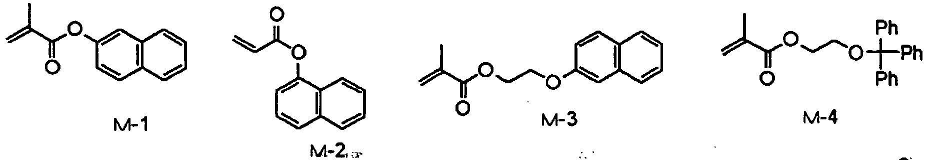

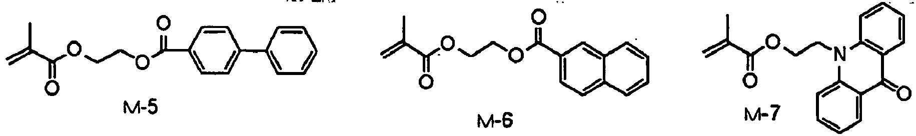

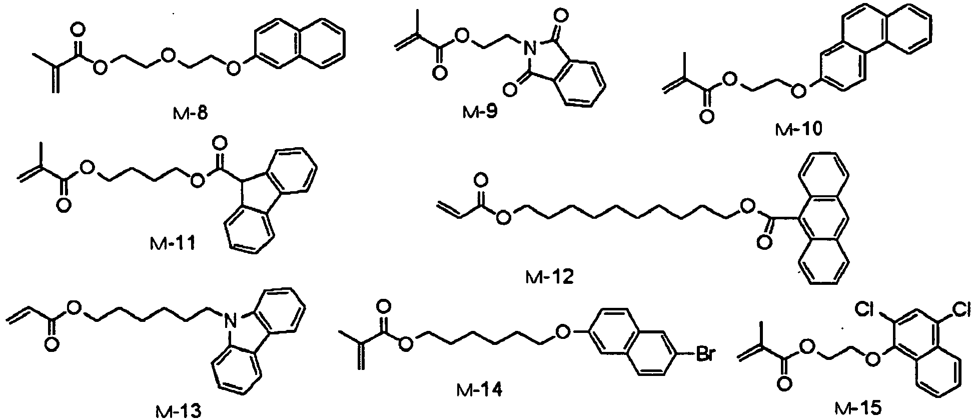

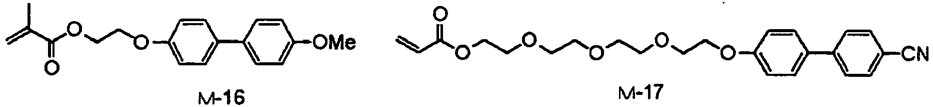

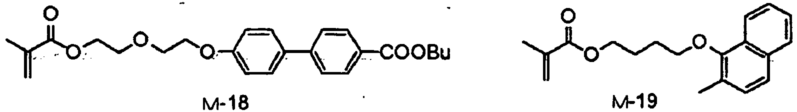

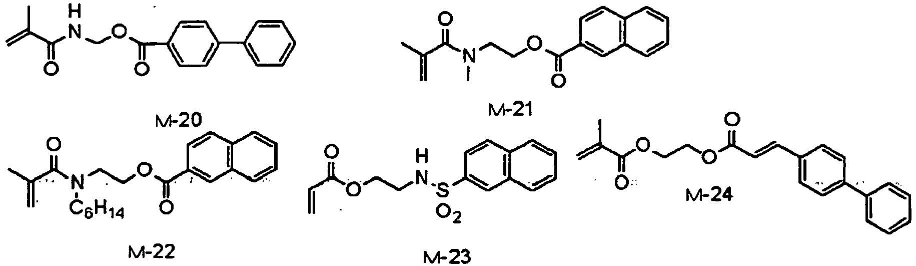

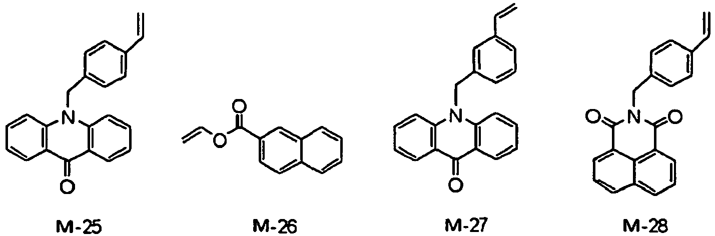

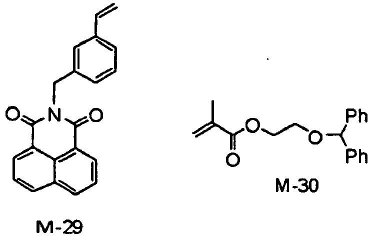

### Repeating unit (b) having Ionic group

The repeating unit (b) having an ionic group is a copolymerization unit contained in the dispersant in the invention.

The repeating unit (b) having an ionic group may be formed from a monomer (B) having an ionic group.

Examples of the monomer (B) having an ionic group include an anionic group-containing monomer and a cationic group-containing monomer.

Examples of the cationic group-containing monomer include an unsaturated tertiary amine-containing vinyl monomer and an unsaturated ammonium salt-containing vinyl monomer.

Examples of the unsaturated tertiary amine-containing vinyl monomer include N,N-dimethylaminoethyl (meth)acrylate, N,N-dimethylaminopropyl (meth)acrylate, N,N-diethylaminoethyl (meth)acrylate, N,N-dimethylaminopropyl (meth)acrylamide, vinylpyrrolidone, 2-vinylpyridine, 4-vinylpyridine, 2-methyl-6-vinylpyridine and 5-ethyl-2-vinylpyridine.

Examples of the unsaturated ammonium salt-containing vinyl monomer include N,N-dimethylaminoethyl (meth)acrylate quaternization product, N,N-diethylaminoethyl (meth)acrylate quaternization product and N,N-dimethylaminopropyl (meth)acrylate quaternization product.

Examples of the anionic group-containing monomer include an unsaturated carboxylic monomer, an unsaturated sulfonic monomer and an unsaturated phosphoric monomer.

Examples of the unsaturated carboxylic monomer include acrylic acid, methacrylic acid, crotonic acid, itaconic acid, maleic acid, fumaric acid, citraconic acid and 2-methacryloyloxymethylsuccinic acid.

Examples of the unsaturated sulfonic monomer include styrenesulfonic acid, 2-acrylamide-2-methylpropanesulfonic acid, 3-sulfopropyl (meth)acrylate and bis-(3-sulfopropyl)-itaconate.

Examples of the unsaturated phosphoric monomer include vinyl phosphonic acid, vinyl phosphate, bis(methacryloxyethyl) phosphate, diphenyl-2-acryloyloxyethyl phosphate, diphenyl-2-methacryloyloxyethyl phosphate and dibutyl-2-acryloyloxyethyl phosphate.

Among these, the monomer (B) having an ionic group is preferably the monomer having an anionic group, and is more preferably the monomer having a carboxyl group from the viewpoint of dispersibility and stability of pigment in water-based pigment dispersion.

The monomer (B) having an ionic group may be used singly or by mixture of two kinds or more.

### Repeating unit (c) represented by Formula (2)

The dispersant used in the invention has the repeating unit (a) represented by Formula (1) and the repeating unit (b) having an ionic group. In a more preferable embodiment of the invention, the dispersant is a copolymer having a repeating unit (c) represented by the following Formula (2).

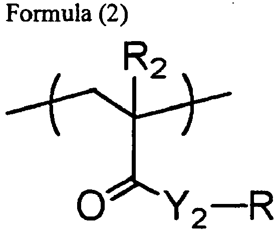

In Formula (2), R₂ represents a hydrogen atom or a methyl group.

Y₂ represents an oxygen atom or -NR₃-; R₃ represents a hydrogen atom or an alkyl group having 1 to 6 carbon atoms. Y₂ is preferably an oxygen atom, -NH- or -N(CH₃)-, and is more preferably an oxygen atom.

In Formula (2), R represents a straight-chain, branched or alicyclic alkyl group having 1 to 20 carbon atoms, or a phenyl group.

The straight-chain, branched or alicyclic alkyl group having 1 to 20 carbon atoms may be unsubstituted or have a substituent.

Examples of the substituent include a phenyl group, a phenoxy group, an alkoxyl group having 1 to 4 carbon atoms, a halogen group and a cyano group.

Specific examples of the straight-chain, branched or alicyclic unsubstituted alkyl group having 1 to 20 carbon atoms include a methyl group, an ethyl group, an n-butyl group, an n-hexyl group, a lauryl group, a stearyl group, an iso-butyl group, a tert-butyl group, a 2-ethylhexyl group, an isobornyl group and a cyclohexyl group; preferable examples thereof include those having 1 to 18 carbon atoms among them, and more preferable examples thereof include those having1 to 12 carbon atoms among them.

R in Formula (2) is preferably a straight-chain, branched or alicyclic alkyl group having 1 to 20 carbon atoms which is an unsubstituted alkyl group or an alkyl group having a substituent such as a phenyl group, a phenoxy group, an alkoxyl group having 1 to 4 carbon atoms, a halogen group or a cyano group. Among these, R in Formula (2) is more preferably a phenylalkyl group having 7 to 10 carbon atoms or a phenoxyalkyl group having 7 to 10 carbon atoms.

The phenylalkyl group having 7 to 10 carbon atoms and the phenoxyalkyl group having 7 to 10 carbon atoms may further have a substituent.

Specific examples of the substituent include an alkyl group having 1 to 6 carbon atoms, an alkoxyl group having 1 to 6 carbon atoms, a halogen group and a cyano group.

Specific examples of the phenylalkyl group having 7 to 10 carbon atoms and the phenoxyalkyl group having 7 to 10 carbon atoms include a benzyl group, a phenylethyl group, a phenoxyethyl group and a 4-cyanophenoxyethyl group, and more preferable examples thereof include a benzyl group and a phenoxyethyl group.

The repeating unit (c) represented by Formula (2) may be formed from a corresponding monomer (C) represented by the following Formula (5).

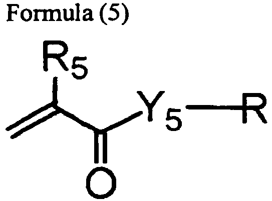

In Formula (5), R₅, Y₅ and R represent the same as the counterparts of Formula (2), and preferable examples thereof are also the same. The monomer (C) represented by Formula (5) may be used singly or by mixture of two kinds or more.

Specific examples of the monomer (C) represented by Formula (5) include the following monomers, while the invention is not limited to the following specific examples.

Examples of the monomer (C) represented by Formula (5) include benzyl (meth)acrylate, phenoxyethyl (meth)acrylate, 4-cyanophenoxyethyl (meth)acrylate, phenyl (meth)acrylate, phenylethyl (meth)acrylate, methyl (meth)acrylate, ethyl (meth)acrylate, (iso)propyl (meth)acrylate, (iso or tertiary)butyl (meth)acrylate, 2-ethylhexyl (meth)acrylate, (iso)decyl (meth)acrylate, (iso)stearyl (meth)acrylate, amyl (meth)acrylate, n-hexyl (meth)acrylate, cyclohexyl (meth)acrylate, n-octyl (meth)acrylate, tert-octyl (meth)acrylate, dodecyl (meth)acrylate, 2-chloroethyl (meth)acrylate, 2-bromoethyl (meth)acrylate, 4-chlorobutyl (meth)acrylate, 2-cyanoethyl (meth)acrylate, 2-methoxyethyl (meth)acrylate, 3-methoxybutyl (meth)acrylate, 2-ethoxyethyl (meth)acrylate, 2-butoxyethyl (meth)acrylate, 1-bromo-2-methoxyethyl (meth)acrylate and 1,1-dichloro-2-ethoxyethyl (meth)acrylate.

The dispersant used in the invention may further contain a copolymerization component in addition to the repeating unit (a) represented by Formula (1), the repeating unit (b) having an ionic group and the repeating unit (c) represented by Formula (2). The copolymerization component is not particularly limited as long as it has a functional group capable of forming a polymer, and any known monomers may be used. Vinyl monomers are preferable from the viewpoint of availability, handling property and versatility. Examples of such monomers to be used include those described in Polymer Handbook 2nd ed., J. Brandrup, Wiley Interscience (1975) Chapter 2 Page 1 to 483. Specific examples thereof include a compound having one addition polymerizable unsaturated bond such as one selected from (meth)acrylates having a nonionic group, styrenes, acrylamides, methacrylamides, allyl compounds, vinyl ethers and vinyl esters.

More specifically, examples thereof include the following monomers.

### (1) (Meth)acrylates having a nonionic group

2-hydroxyethyl (meth)acrylate, ω-hydroxypolyethylene glycol (meth)acrylate (addition molar number (n) of polyoxyethylene: 2 to 100), ω-methoxypolyethylene glycol (meth)acrylate (addition molar number (n) of polyoxyethylene: 2 to 100) and ω-ethoxypolyethylene glycol (meth)acrylate (addition molar number (n) of polyoxyethylene: 2 to 100);

### (2) Diesters of unsaturated polyvalent carboxylic acid

dimethyl maleate, dibutyl maleate, dimethyl itaconate, dibutyl itaconate, dibutyl crotonate, dihexyl crotonate, diethyl fumarate and dimethyl fumarate;

### (3) Amides of α,β-unsaturated carboxylic acid

N,N-dimethylacrylamide, N,N-diethylacrylamide, N-n-propylacrylamide, N-tert butylacrylamide, N-tert octylacrylamide, N-cyclohexylacrylamide, N-phenylacrylamide, N-(2-acetoacetoxyethyl)acrylamide, N-benzylacrylamide, N-acryloyl morpholine, diacetone acrylamide and N-methylmaleimide;

### (4) Unsaturated nitriles

acrylonitrile and methacrylonitrile;

### (5) Styrenes and modified compounds thereof

styrene, vinyltoluene, ethylstyrene, para-tert butylstyrene, methyl para-vinylbenzoate, α-methylstyrene, para-chloromethylstyrene, vinylnaphthalene, para-methoxystyrene, para-hydroxymethylstyrene and para-acetoxystyrene;

### (6) Vinyl esters

vinyl acetate, vinyl propionate, vinyl butyrate, vinyl isobutyrate, vinyl benzoate, vinyl salicylate, vinyl chloroacetate, vinyl methoxyacetate and vinyl phenylacetate;

### (7) Vinyl ethers

methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, n-dodecyl vinyl ether, n-eicosyl vinyl ether, 2-ethylhexyl vinyl ether, cyclohexyl vinyl ether, fluorobutyl vinyl ether and fluorobutoxyethyl vinyl ether; and (8) Other polymerizable monomers

N-vinylpyrrolidone, methyl vinyl ketone, phenyl vinyl ketone, methoxyethyl vinyl ketone, 2-vinyloxazoline and 2-isopropenyloxazoline.

The content of the repeating unit (a) represented by Formula (1) which may be formed by the monomer represented by Formula (4) is preferably 2% to 95% by mass, more preferably 5% to 50% by mass and particularly preferably 5% to 40% by mass in the total mass of the dispersant.

The content of the repeating unit (b) having an ionic group which may be formed by the monomer (B) having an ionic group is preferably 3% to 20% by mass, more preferably 5% to 18% by mass and particularly preferably 5% to 15% by mass in the total mass of the dispersant.

The content of the repeating unit (c) represented by Formula (2) which may be formed by the monomer (C) represented by Formula (5) is preferably 20% to 95% by mass, more preferably 32% to 90% by mass and particularly preferably 45% to 90% by mass in the total mass of the dispersant.

When a hydrophilic component such as (meth)acrylates having a nonionic group in addition to (a), (b) and (c) is further introduced into the dispersant, the content of the hydrophilic repeating unit is preferably 20% by mass or less, more preferably 15% by mass or less with respect to the total mass of the dispersant.

The content in the above range is preferable for the reason that orientation property to pigment may be improved, dissolution of the dispersant in water may be restrained and the pigment may be covered with the dispersant, so that a pigment composition having small particle diameter and excellent stability over time may be easily obtained.

The dispersant in the invention may be a binary copolymer (copolymer with two components) containing the repeating unit (a) represented by Formula (1) and the repeating unit (b) having an ionic group. The dispersant is more preferably a ternary or more copolymer (copolymer with three or more components) containing at least the repeating unit (a) represented by Formula (1), the repeating unit (b) having an ionic group and the repeating unit (c) represented by Formula (2) from the viewpoint of moderately improving solubility of the dispersant in various organic solvents to obtain a pigment composition more easily.

The dispersant in the invention may be a random copolymer in which each structural unit is irregularly introduced, or a block copolymer in which each structural unit is regularly introduced. When the dispersant is a block copolymer, each structural unit may be introduced into the block copolymer in any order upon synthesizing of the block copolymer, and the same kind of components may be used twice or more in one block copolymer. The dispersant is preferably a random copolymer in view of improvement in dispersibility of the pigment and ease in synthesis.

The weight-average molecular weight of the dispersant used in the invention is preferably 10,000 to 200,000, more preferably 15,000 to 150,000 and further preferably 20,000 to 100,000 from the viewpoint of dispersibility and dispersion stability of the pigment.

The molecular weight in the above range is preferable from the viewpoint that steric repulsion effect thereof as the dispersant becomes a favorable tendency, and steric effect offers a tendency of taking less time for adsorption in the pigment.

A value measured in terms of polystyrene (PS) by using gel permeation chromatography (GPC) is adopted for the weight-average molecular weight.

The molecular-weight distribution (denoted by weight-average molecular weight value/number-average molecular weight value) of the dispersant used in the invention is preferably in the range of from 1 to 6, and is more preferably in the range of from 1 to 4.

The molecular-weight distribution in the above range is preferable from the viewpoint of shortening of time to disperse the pigment and stability of dispersion over time. Here, number-average molecular weight and the weight-average molecular weight are molecular weights converted by using polystyrene as a standard reference material, and detected by solvent THF and differential refractometer through GPC analysis device with the use of a column of TSK GEL GMHxL, TSK GEL G4000HxL and/or TSK GEL G2000HxL (trade names, manufactured by Tosoh Corp.).

The dispersant used in the invention may be synthesized by various polymerization methods such as solution polymerization, precipitation polymerization, suspension polymerization, block polymerization or emulsion polymerization. Polymerization reaction may be performed by known batch, semicontinuous and continuous operations.

Examples of a method for starting polymerization include a method using a radical initiator and a method including irradiating light or radioactive rays. These polymerization methods and methods for starting polymerization are described, for example, in "Polymer Synthesis Method" revised edition written by Teiji Tsuruta (published by The Nikkan Kogyo Shimbun, Ltd., 1971) and "Experimental Method of Polymer Synthesis" written by Takayuki Ohtsu and Masayoshi Kinoshita, published by Kagaku-Dojin Publishing Company, Inc., in 1972, pages 124 to 154.

A solution polymerization method using a radical initiator is particularly preferable among the above polymerization methods. The solvent used in the solution polymerization method may be one, a mixture of two kinds or more, or mixture solvent with water, of various organic solvents such as ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, methylene chloride, chloroform, dichloroethane, methanol, ethanol, 1-propanol, 2-propanol or 1-buthanol.

A temperature for polymerization to form the dispersant is determined in relation to the molecular weight of the dispersant to be produced and the kind of the initiator, while it is typically approximately 0°C to 100°C, and is preferably a range of 50°C to 100°C.

A reaction pressure for polymerization to form the dispersant may be properly selected, while it is typically 1 to 100 kg/cm², and is particularly preferably approximately 1 to 30 kg/cm². A reaction time for polymerization to form the dispersant may be approximately 5 to 30 hours. The obtained dispersant may be refined by reprecipitation or the like.

Specific examples of the dispersant are preferable in the invention are shown below, while the scope of the invention is not limited thereto.

| | | **Mw** | **Nw/Mn** |
|---|---|---|---|
| B-1 | 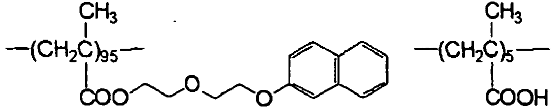 | 107400 | 2.45 |
| B-2 | 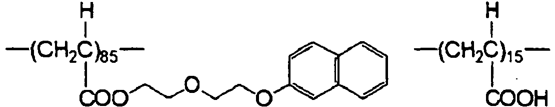 | 30900 | 2.34 |
| B-3 | 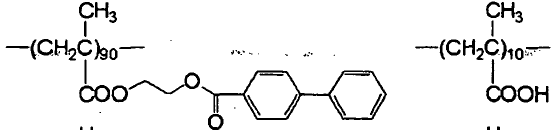 | 52500 | 3.84 |
| B-4 | 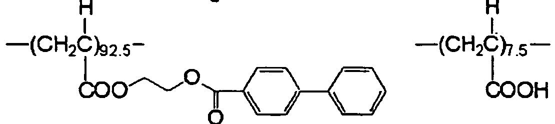 | 40800 | 1.96 |
| B-5 | 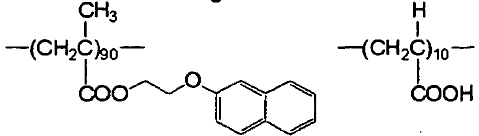 | 38900 | 2.1 |
| B-6 | 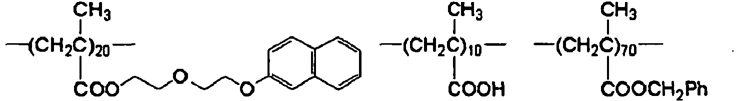 | 35000 | 2.08 |
| B-7 | 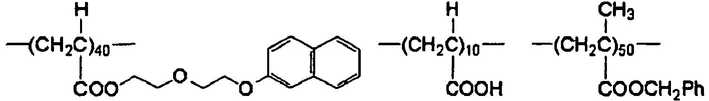 | 44600 | 2.02 |
| B-8 | 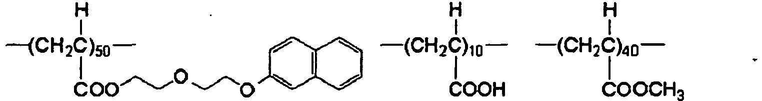 | 75400 | 4.81 |
| B-9 | 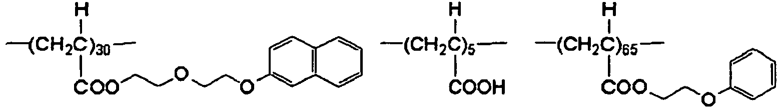 | 53800 | 2.97 |
| B-10 | 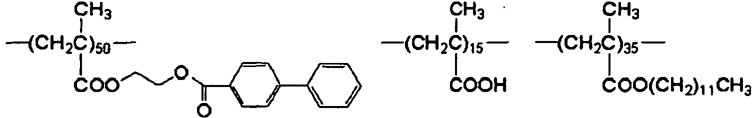 | 49900 | 3.25 |
| B-11 | 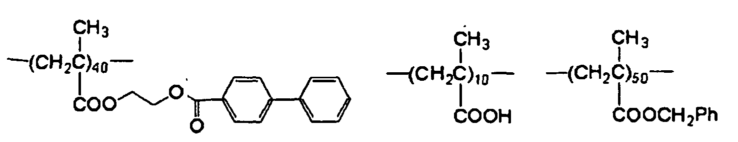 | 25900 | 3.21 |
| B-12 | 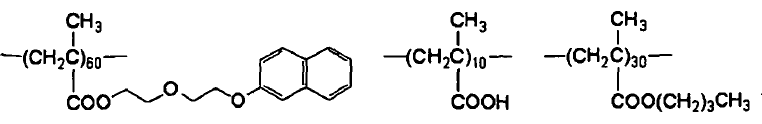 | 22800 | 2.18 |
| B-13 | 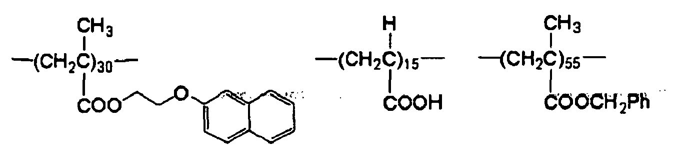 | 42500 | 2.38 |
| B-14 | 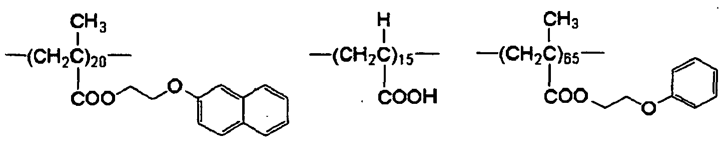 | 42200 | 2.23 |
| B-15 | 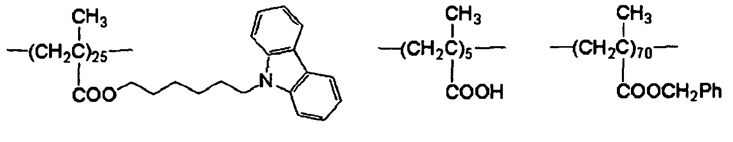 | 31200 | 2.16 |
| | | | |

| | | **Mw** | **Mw/Mn** |
|---|---|---|---|
| B-16 | 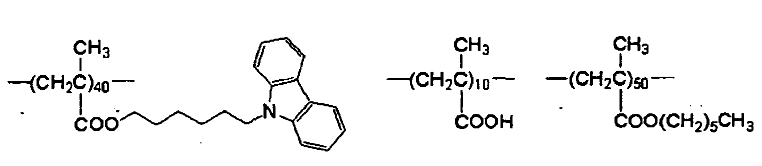 | 26000 | 2.91 |
| B-17 | 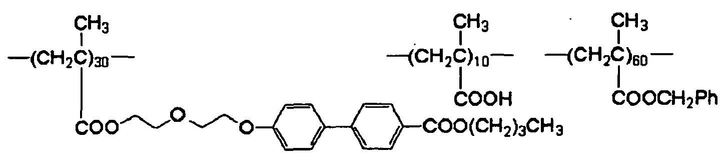 | 52000 | 2.45 |
| B-18 | 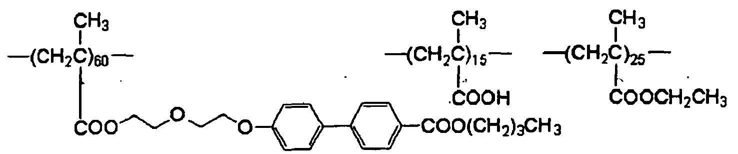 | 23500 | 2.32 |
| B-19 | 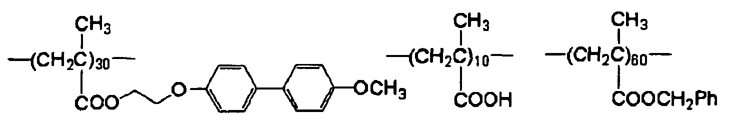 | 35000 | 2.08 |
| B-20 | 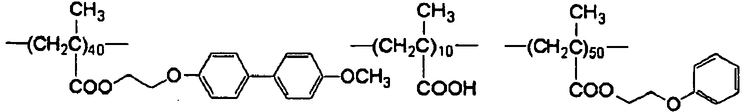 | 28300 | 2.06 |
| B-21 | 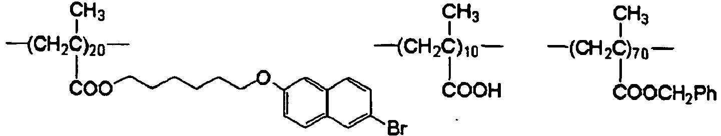 | 39600 | 2.76 |
| B-22 | 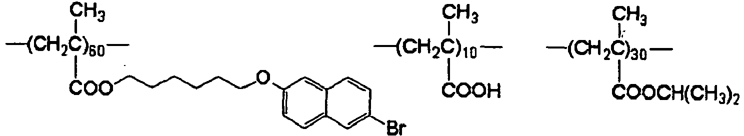 | 53800 | 2.29 |
| B-23 | 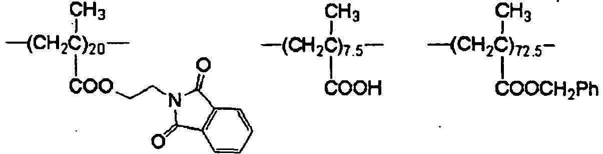 | 25100 | 1.8 |
| | | | |

| | | **Mw** | **Mw/Mn** |
|---|---|---|---|
| B-24 | 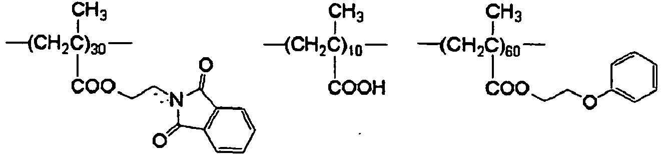 | 26000 | 2.0 |
| B-25 | 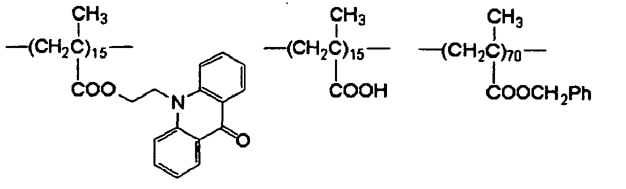 | 23500 | 2.32 |
| B-26 | 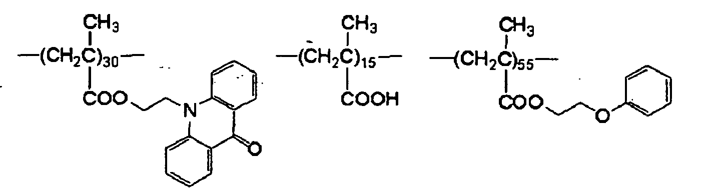 | 21000 | 2.06 |
| B-27 | 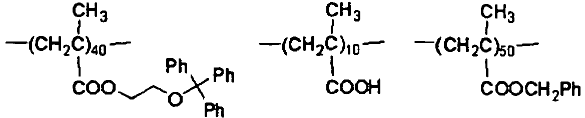 | 44500 | 2.51 |
| B-28 | 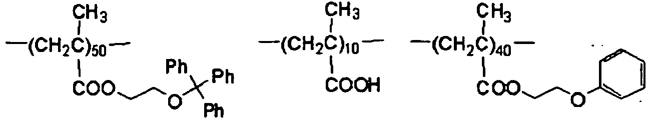 | 27000 | 2.42 |
| B-29 | 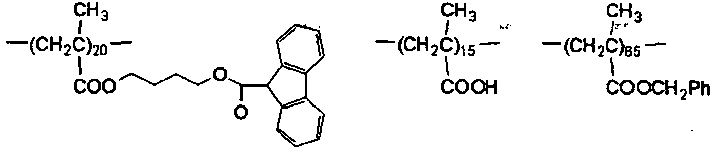 | 34000 | 2.05 |
| 8-30 | 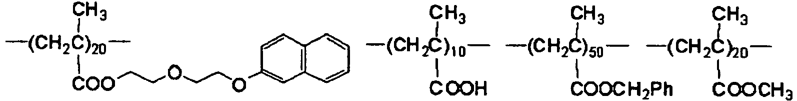 | 38300 | 2.04 |
| B-31 | 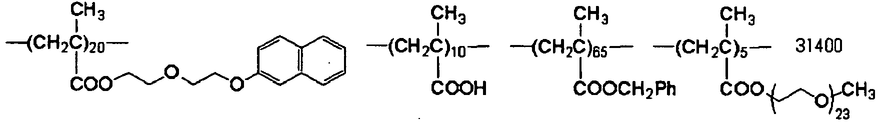 | 31400 | 15 |
| B-32 | 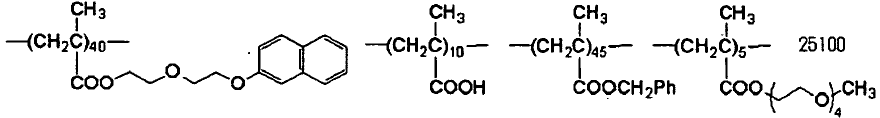 | 25100 | 1.58 |
| B-33 | 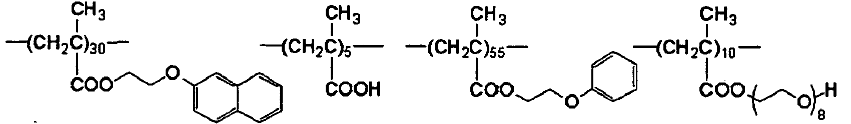 | 38300 | 2.34 |
| B-34 | 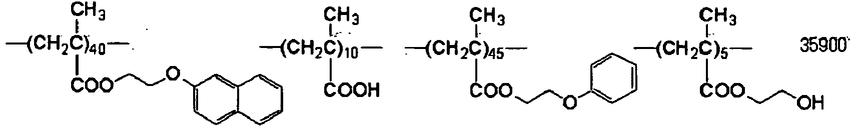 | 35900 | 2.24 |
| B-35 | 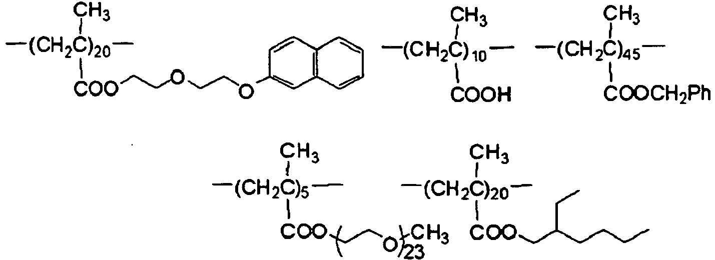 | 30900 | 1.85 |
| B-36 | 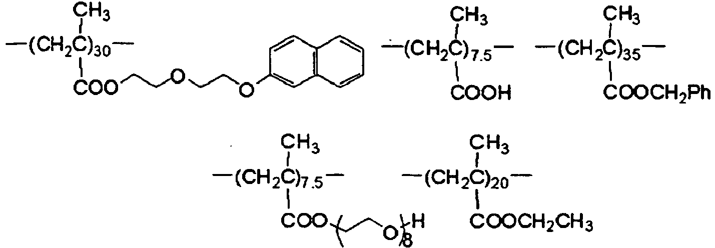 | 32300 | 2.02 |
| | | | |

| | | **Mw** | **Mw/Mn** |
|---|---|---|---|
| B-37 | 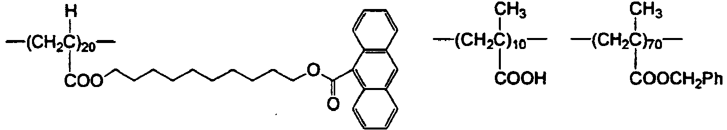 | 56300 | 2.88 |
| B-38 | 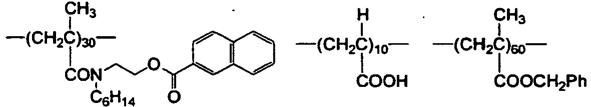 | 48600 | 2.2 |
| B-39 | 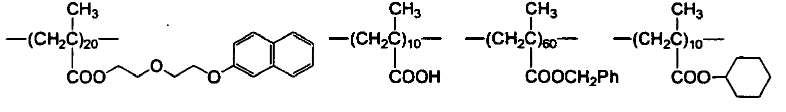 | 32300 | 2.07 |
| B-40 | 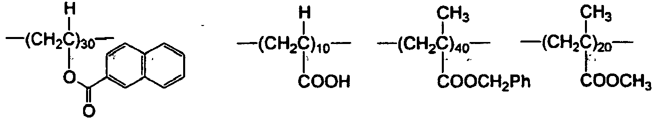 | 43800 | 2.47 |
| B-41 | 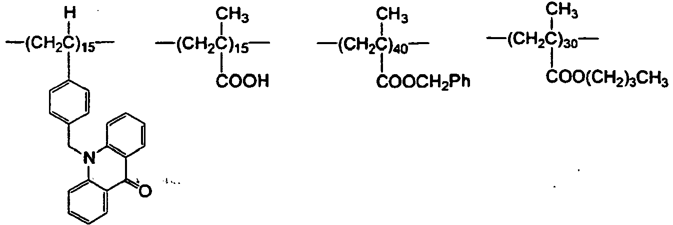 | 49900 | 3.25 |
| B-42 | 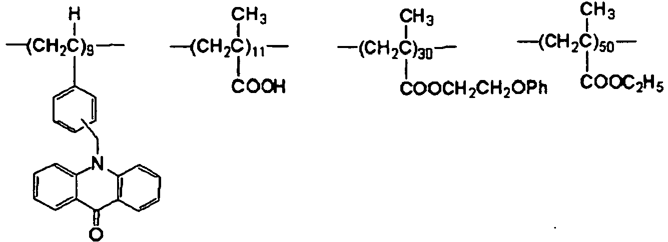 | 40200 | 2.35 |
| B-43 | 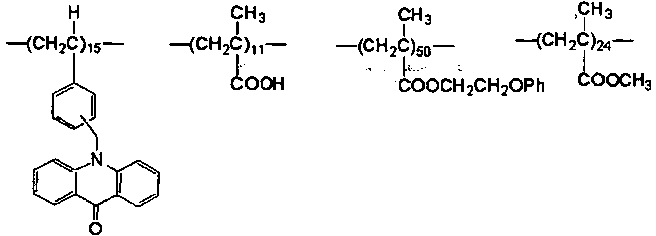 | 43200 | 2.37 |
| B-44 | 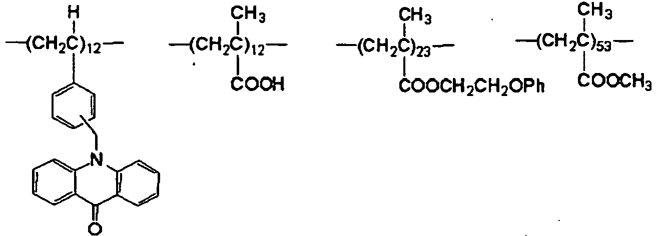 | 38800 | 2.22 |
| B-45 | 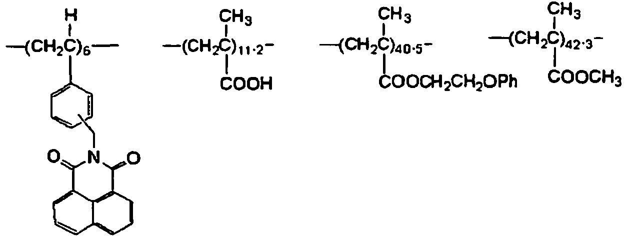 | 49500 | 2.51 |
| B-46 | 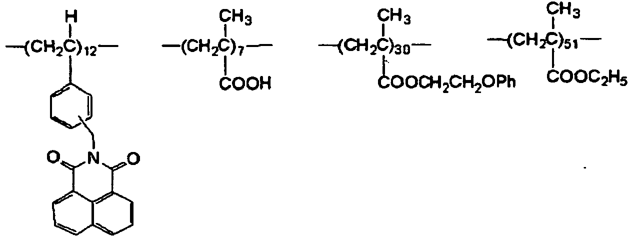 | 39900 | 2.37 |
| B-47 | 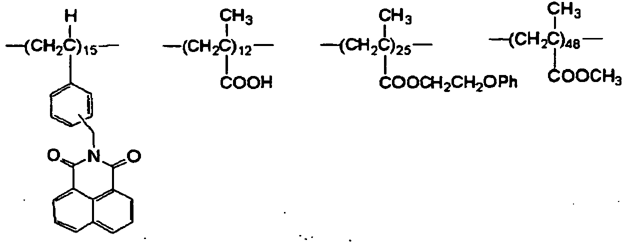 | 42300 | 2.33 |
| B-48 | 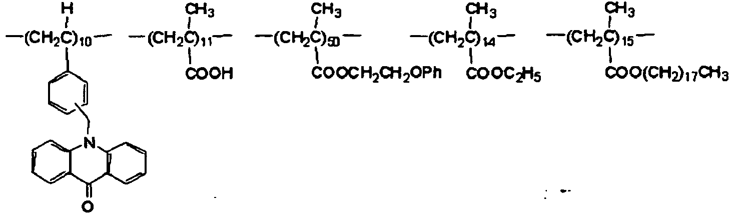 | 50100 | 2.41 |
| B-49 | 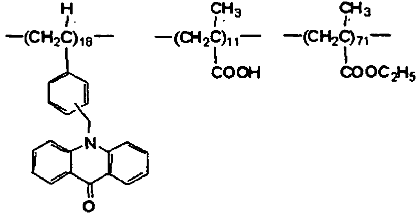 | 32300 | 2.21 |
| B-50 | 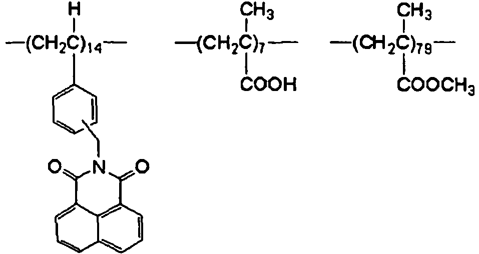 | 43300 | 2.31 |
| B-51 | 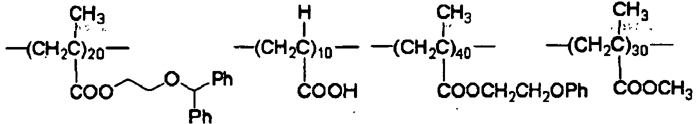 | 58300 | 2.76 |
| B-52 | 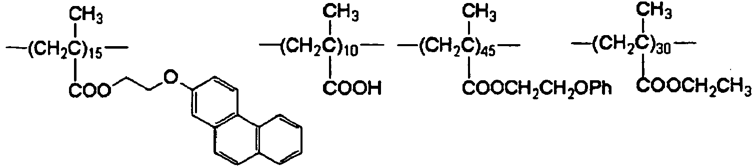 | 51900 | 2.55 |
| B-53 | 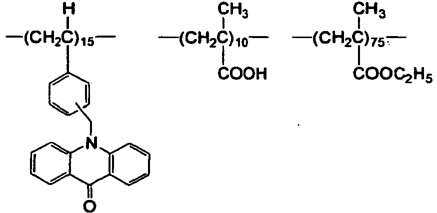 | 45000 | 2.46 |

The content of the dispersant in the pigment composition is preferably 5% to 200% by mass, more preferably 10% to 100% by mass and particularly preferably 20% to 80% by mass with respect to the content of the pigment from the viewpoint of pigment dispersibility, ink colorability and dispersion stability of the pigment composition.

The content of the dispersant in the pigment composition in the above range is preferable for the reason that the pigment may be covered with a proper amount of the dispersant to bring a tendency to easily obtain a pigment composition having small particle diameter and excellent stability over time.

When a dispersant other than the dispersant is used in the pigment composition of the invention, a content of the other dispersant is within a range which satisfies the conditions of the content of the dispersant.

Examples of the other dispersant may include conventionally known water-soluble low-molecular dispersants and water-soluble polymers.

### Solvent

The pigment composition contains at least the pigment and the dispersant. A solvent may be further used for dispersing the pigment.

Examples of the solvent include water, an organic solvent and a mixture solvent formed of water and an organic solvent. Among the above, an organic solvent and a mixture solvent of water and an organic solvent are preferable when it is used for the water-based pigment dispersion described below.

The organic solvent is not particularly limited and may be properly selected from among known organic solvents. Examples thereof include ketones such as methyl ethyl ketone, acetone, methyl isobutyl ketone or cyclohexanone; alcohols such as ethanol, propanol, buthanol, hexanol, cyclohexanol, ethylene glycol, diethylene glycol or glycerin; (poly)alkylene glycol monoalkyl ether and acetates thereof such as ethylene glycol monomethyl ether, ethylene glycol monoethyl ether, propylene glycol monomethyl ether, propylene glycol monoethyl ether, diethylene glycol monomethyl ether or diethylene glycol monoethyl ether; acetates such as ethyl acetate, n-propyl acetate, iso-propyl acetate, n-butyl acetate or iso-butyl acetate; and aromatic hydrocarbons such as benzene, toluene or xylene.

Among these, ketones, acetates and alcohols are preferable, and ketones are more preferable.

These may be used singly in one kind or together in two kinds or more.

The content of the solvent in the pigment composition is typically 10 to 1,000 parts, and is preferably 20 to 500 parts, with respect to 100 parts by mass of the pigment.

It is preferable that the content is set to 10 parts or more since it may enable to easily prevent increase in viscosity of the composition, and it is preferable that the content is set to 1,000 parts or less since it may enable to easily secure space for storage.

### Other additives

Other additives such as a basic substance (a neutralizer) or a surfactant may be added to the pigment composition as required.

### Basic substance

A neutralizer (organic base and inorganic alkali) may be used as the basic substance. The basic substance is preferably added so that the pigment composition exhibits a pH of 7 to 11, more preferably added to the pigment composition for the purpose of neutralizing the dispersant so that the pigment composition exhibits a pH of 9 to 10.

The content of the basic substance is preferably 50% to 150% by mol, more preferably 70% to 120% by mol, and particularly preferably 80% to 100% by mol, with respect to the content of an ionic group in the dispersant.

### Preparation of Pigment composition

Examples of a method for preparing the pigment composition of the invention include a method including dispersing a mixture containing the pigment, the dispersant, and as required, a solvent (preferably an organic solvent) by a disperser.

Specific examples of the method for preparing the pigment composition of the invention include the following methods, while the scope of the invention is not limited thereto.
(1) The dispersant is added to a solvent to prepare a dispersant solution (preparation of a dispersant solution).
(2) A solution of a basic substance is added to the dispersant solution (neutralization).
(3) A separately-prepared pigment water dispersion is added to the neutralized solution and dispersed to obtain a pigment dispersion slurry (pigment dispersion slurry-formation).
(4) The pigment dispersion slurry is subjected to finely dispersing to obtain a pigment dispersion (a pigment composition) (dispersing of pigment).

The solution of the basic substance in (2) may be prepared by dissolving the basic substance in the solvent, which is preferably water.

The pigment water dispersion in (3) may be prepared by adding the pigment to water and dispersing it with the use of a disperser.

In producing the pigment composition, kneading dispersion treatment may be performed while applying strong shear force by using a twin roll, a triple roll, a ball mill, a thoron mill, a disper, a kneader, a co-kneader, a homogenizer, a blender, a single-screw, a double-screw extruder or the like.

The details of kneading and dispersing are described in "Paint Flow and Pigment Dispersion" written by T. C. Patton (1964, published by John Wiley and Sons).

In producing the pigment composition, as required, fine dispersion treatment may be performed by using a vertical- or horizontal sand grinder, a pin mill, a slitting mill, a ultrasonic disperser or the like with beads made of glass, zirconia or the like having a particle diameter of 0.01 to 1 mm.

The pigment in the pigment composition thus obtained may maintain favorable dispersion state and the obtained pigment composition may be excellent in stability over time.

### Water-based Pigment dispersion

A water-based pigment dispersion of the invention contains the pigment composition of the invention and water or a water-based carrier medium. The water-based carrier medium contains water and at least one kind of an organic solvent.

The configuration of the water-based pigment dispersion may provide favorable dispersibility and stability of the pigment. A film formed by using the water-based pigment dispersion may be thin and have excellent light shielding property (high optical density).

Components of the water-based pigment composition of the invention are described.

### Water-soluble Carrier medium

The water-based pigment of the invention contains water and at least a water-soluble organic solvent. The water-soluble organic solvent may be a single kind or a combination of plural kinds thereof.

The water-soluble organic solvent can be contained as a drying inhibitor and/or as a permeation accelerator.

When the water-based pigment dispersion of the invention is particularly applied as a water-based ink for an image recording method by an inkjet method, clogging of nozzle, which may possibly be generated by drying of an ink at an ink jet orifice, may be effectively prevented by the drying inhibitor.

The drying inhibitor is preferably a water-soluble organic solvent having vapor pressure lower than that of water. Specific examples of the drying inhibitor include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol compounds, glycerin and trimethylolpropane; lower alkyl ethers of polyhydric alcohol, such as ethylene glycol monomethyl (or ethyl) ether, diethylene glycol monomethyl (or ethyl) ether and triethylene glycol monoethyl (or butyl) ether; heterocycles such as 2-pyrrolidone, N-methyl-2-pyrrolidone, 1,3-dimethyl-2-imidazolidinone and N-ethylmorpholine; sulfur-containing compounds such as sulfolane, dimethylsufoxide and 3-sulforene; polyfunctional compounds such as diacetone alcohol and diethanolamine; and urea compounds. Above all, polyhydric alcohols such as glycerin and diethylene glycol are preferred as the drying inhibitor.

The drying inhibitor may be used singly or as mixtures of two kinds or more thereof.

The drying inhibitor may be preferably contained in an amount of from 5% to 50% by mass with respect to the total amount of the ink.

The permeation accelerator is preferably used for the purpose of well permeating the ink into a recording medium (printing paper). Specific examples of the permeation accelerator include alcohols such as ethanol, isopropanol, butanol, di(tri)ethylene glycol monobutyl ether and 1,2-hexanediol; sodium lauryl sulafate, sodium oleate or nonionic surfactants.

When the permeation accelerator is contained in the water-based pigment dispersion in an amount of from 5% to 30% by mass, sufficient effect can be exhibited. The permeation accelerator is preferably used within a range of the addition amount such that bleeding of printing and print-through are not generated.

Other than the applications described above, the water-soluble organic solvent can be used to adjust viscosity. Specific examples of the water-soluble organic solvent that can be used to adjust viscosity include alcohols (for example, methanol, ethanol, propanol, isopropanol, butanol, isobutanol, secrbutanol, t-butanol, pentanol, hexanol, cyclohexanol and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol and thiodiglycol), glycol compounds (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether and ethylene glycol monophenyl ether), amines (for example, ethanolamine, diethanolamine, triethanolamine, N-methyl diethanolamine, N-ethyl diethanolamine, morpholine, N-ethylmorpholine, ethylene diamine, diethylene triamine, triethylene tetramine, polyethylene imine and tetramethylpropylene diamine), and other polar solvents (for example, formaldehyde, N,N-dimethylformamide, N,N-dimethylacetamide, diemthylsulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone).

The water-soluble organic solvent may be used alone or as mixtures of two kinds or more thereof.

Examples of the other additives which can be used in the invention further include conventionally-known pigment dispersions and conventionally-known additives which can be used in water-based inks.

Examples of the other additives which can be used in the invention include conventional additives such as color fading inhibitors, emulsion stabilizers, permeation accelerators, ultraviolet absorbers, preservatives, mildew-proofing agents, pH regulators, surface tension regulators, defoamers, viscosity regulators, dispersants, dispersion stabilizers, anti-rust agents and chelating agents. The various additives may be directly added after preparation of the water-based pigment dispersion, or may be added at the time of preparation of the water-based pigment dispersion.

The ultraviolet absorber is used for the purpose of improving preservability of an image formed of an ink using the pigment dispersion of the invention. Examples of the ultraviolet absorber include benzotriazole compounds described in, for example, JP-A Nos. 58-185677, 61-190537, 2-782, 5-197075 and 9-34057; benzophenone compounds described in, for example, JP-A Nos. 46-2784 and 5-194483, and US Patent No. 3,214,463; cinnamic acid compounds described in, for example, JP-B Nos. 48-30492 and 56-21141, and JP-A No. 10-88106; triazine compounds described in, for example, JP-A Nos. 4-298503, 8-53427, 8-239368 and 10-182621, and JP-A No. 8-501291; compounds described in Research Disclosure No. 24239; and compounds that absorb ultraviolet light and emit fluorescence, i.e., fluorescent brighteners, represented by stilbene compounds or benzoxazole compounds.

The color fading inhibitor is used for the purpose of improving storability of an image formed of an ink using the pigment dispersion of the invention. Examples of the color fading inhibitor that can be used include various organic color fading inhibitors and metal complex color fading inhibitors. Examples of the organic color fading inhibitor include hydroquinones, alkoxyphenols, dialkoxyphenols, phenols, anilines, amines, indanes, chromanes, alkoxyanilines and heterocycles. Examples of the metal complex color fading inhibitor include a nickel complex and a zinc complex. More specifically, compounds described in the patents cited in Research Disclosure No. 17643, chapter VII, items I to J; Research Disclosure No. 15162: Research Disclosure No. 18716, page 650, the left-hand column; Research Disclosure No. 36544, page 527; Research Disclosure No. 307105, page 872; and Research Disclosure No. 15162, and compounds included in the formulae of the representative compounds and the exemplified compounds described on pages 127 to 137 of JP-A No. 62-215272 can be used.

Examples of the mildew-proofing agent include sodium dehydroacetate, sodium benzoate, sodium pyridinethion-1-oxide, p-hydroxybenzoic acid ethyl ester, 1,2-benzisothiazolin-3-one and its salt. Those are preferably used in the water-based ink composition in an amount of from 0.02% to 1.00% by mass.

A neutralizer (organic base and inorganic alkali) may be used as the pH regulator. The pH regulator may be preferably added in an amount such that the water-based pigment dispersion has pH of from 6 to 10, and more preferably added in an amount such that the water-based pigment dispersion has pH of from 7 to 10, for the purpose of neutralization or improving storage stability of the water-based pigment dispersion of the invention.

Examples of the surface tension regulator include nonionic surfactants, cationic surfactants, anionic surfactants and betaine surfactants.

The amount of the surface tension regulator to be added is preferably in an such that the surface tension of the water-based pigment dispersion is adjusted to from 20 to 60 mN/m, which is more preferably from 20 to 45 mN/m, and further preferably from 25 to 40 mN/m, in order to well eject the water-based ink composition by an inkjet method.

The surface tension of the water-based pigment dispersion can be measured using, for example, the Wilhelmy method.

Specific examples of the surfactant are as follows. Namely, specific examples of a hydrocarbon surfactant include anionic surfactants such as fatty acid salts, alkyl sulfate ester salts, alkyl benzene sulfonates, alkyl naphthalene sulfonates, dialkyl sulfosuccinates, alkyl phosphate ester salts, naphthalenesulfonic acid-formalin condensates or polyoxyethylene alkyl sulfate ester salts; and nonionic surfactants such as polyoxyethylene alkyl ether, polyoxyethylene alkyl allyl ether, polyoxyethylene fatty acid ester, sorbitan fatty acid ester, polyoxyethylene sorbitan fatty acid ester, polyoxyethylene alkyl amine, glycerin fatty acid ester or oxyethylene oxypropylene block copolymer. SURFYNOLS (trade name, products of Air Products & Chemicals), which is an acetylene polyoxyethylene oxide surfactant, can be also preferably used. Further, amine oxide amphoteric surfactants such as N,N-dimethyl-N-alkyl amine oxide can be also preferably used.

Examples of the surfactant further include materials described on pages 37 to 38 of JP-ANo. 59-157636 or Research Disclosure No. 308119 (1989).

When fluorine (alkyl fluoride) surfactants, silicone surfactants and the like, such as those described in JP-A Nos. 2003-322926, 2004-325707 or 2004-309806 are used, scratch fastness can be improved.

The surface tension regulator can be used as a defoamer, and fluorine compounds, silicone compounds, chelating agents represented by EDTA, and the like can be also used in the invention.

When the water-based pigment dispersion is applied to an inkjet method as it is, the water-based pigment dispersion preferably has a viscosity in a range of from 1 to 30 mPa·s, which is more preferably in a range of from 1 to 20 mPa·s, and is further preferably in a range of from 2.5 to 15 mPa·s, from the standpoints of droplet ejection stability and aggregation speed.

The value of the viscosity of the pigment dispersion is the one obtained by measurement at 25 °C.

The viscosity of the water-based ink composition can be measured using, for example, an E-type viscometer.

### Method for Producing Water-based pigment dispersion

Examples of a method for producing the water-based pigment dispersion of the invention include a method including adding, to the pigment composition, water or a water-based carrier medium which contains water and at least one kind of organic solvent.

There is no particular limitation for the producing method, while it preferably includes the following processes (1) and (2).
Process (1): subjecting, to dispersion treatment, a mixture containing the pigment composition (dispersant and pigment) and water or the water-based carrier medium (containing water and organic solvent), and a neutralizer as required
Process (2): removing the organic solvent from the resultant of the process (1)

In the process (1), water or the water-based carrier medium is added to and mixed with the pigment composition, wherein a neutralizer and a surfactant may be added and mixed to the organic solvent as required, and then dispersing the mixture by using a disperser so as to obtain a dispersion of with a configuration of water-based medium-organic solvent.

Then, the water-based pigment dispersion can be obtained by removing the organic solvent in the process (2).

Examples of the producing method may further include a method including: the mixing the dispersant, an organic solvent capable of dissolving the dispersant, pigment, and water or a water-based carrier medium having water and at least one kind of an organic solvent; and removing the organic solvent capable of dissolving the dispersant. While the producing method is not particularly limited, it preferably includes the following processes (1)' and (2)'.
Process (1)': subjecting, to dispersion treatment, a mixture containing the pigment, the dispersant, an organic solvent capable of dissolving the dispersant, and water or a water-based carrier medium having water and at least one kind of an organic solvent, and a neutralizer and a surfactant as required
Process (2)': removing the organic solvent from the resultant of the process (1)'

In the process (1)', the dispersant is firstly dissolved in an organic solvent to obtain a mixture thereof. Next, the pigment, either water or a water-based carrier medium having water and at least one kind of organic solvent, and a neutralizer and a surfactant as required, are added to the mixture, mixed and subjected to dispersing treatment to obtain a water-based pigment dispersion with a configuration of oil-in-water. When neutralizing is performed, degree of neutralization is not particularly limited, while it is typically preferable that the water-based pigment dispersion finally obtained is neutral to have a pH of, for example; 4.5 to 10. The pH may be also determined in accordance with a degree of neutralization desired to the dispersant.

Then, the water-based pigment dispersion may be obtained by removing the organic solvent in the process (2)'.

According to the method for producing the water-based pigment dispersion of the invention, the pigment may be finely dispersed to produce a water-based pigment dispersion excellent in stability over time.

The pigment composition used in the producing method for the water-based pigment dispersion is the same as the pigment composition of the invention, and preferable examples are also similar. The water-based carrier medium used in the producing method for the water-based pigment dispersion is the same as the medium of the water-based pigment dispersion, and preferable examples are also similar.

Examples of a disperser usable in the producing method for the water-based pigment dispersion of the invention include dispersers referred for forming the mixing dispersion of the pigment composition.

In the producing method for the water-based pigment dispersion of the invention, a method for removing the organic solvent is not particularly limited, and the removal may be performed by a known method such as reduced-pressure distillation.

The average particle diameter of the pigment obtained by the method for producing the water-based pigment dispersion of the invention is preferably 10 nm or more and less than 200 nm, more preferably 30 nm or more and less than 130 nm, and further preferably 60 nm or more and less than 100 nm. Such a range is preferable since chromogenic property, dispersion stability and discharge stability in ejecting the water-based pigment dispersion may become favorable.

The average particle diameter of dispersed particles of the pigment is a value measured by using dynamic light scattering.

The water-based pigment dispersion of the invention may be used, for example, for a water-based ink for ink-jet recording and a water-based ink for writing materials such as water-based ball-point pens or marker pens. In this case, in order to prevent ink-jet nozzles and pen tips from clogging due to drying, a low-volatile or nonvolatile water-soluble organic solvent may be also added to the water-based pigment dispersion. In order to improve permeability of the water-based pigment dispersion into a recording medium, a volatile solvent may be also added to the water-based pigment dispersion.

### Water-based ink for Ink-jet recording

The water-based ink for ink-jet recording of the invention (properly referred to as "water-based ink" or "aqueous ink" herein) contains the water-based pigment dispersion of the invention.

The water-based ink for ink-jet recording of the invention may be prepared by using the water-based pigment dispersion of the invention as it is, or by diluting with the water-based carrier medium, with further adding thereto the drying inhibitor, other additives, and the like as required.

The amount of the pigment contained in the water-based ink is preferably a range of 0.1% to 20% by mass, and is more preferably a range of 0.5% to 10% by mass, with respect to the amount of the water-based ink from the viewpoint of coloration property, storage stability and discharge property of the water-based ink. The amount of the dispersant contained in the water-based ink is preferably a range of 1 % to 150% by mass, and is more preferably a range of 5% to 100% by mass, with respect to the amount of the pigment (coloring agent) from the viewpoint of dispersibility, storage stability and discharge property of the water-based ink.

The pH of the water-based ink is preferably in a range of 7 to 10. When the pH is set in this range, stability of the water-based ink over time may improved and corrosion of units of an ink-jet recording device, which is a device to which the water-based ink applied to, can be suppressed.

Examples of a basic substance which can be used for neutralizing the water-based ink include inorganic alkaline agents such as alkali metal hydroxides such as sodium hydroxide or potassium hydroxide, and organic amines such as diethanolamine or triethanolamine. The neutralizing may also include utilization of organic acids such as citric acid or tartaric acid, mineral acids such as hydrochloric acid or phosphoric acid, and the like as required.

In order to prevent ink-jet nozzles from clogging due to drying, a low-volatile or nonvolatile solvent, which can be selected from the water-soluble organic solvent, may be added to the water-based ink of the invention. In order to improve permeability into a recording medium, a volatile solvent may be added to the water-based ink of the invention.
In order to provide a proper surface tension, a surfactant may be preferably added to the water-based ink of the invention when the ink is used for ink-jet recording.

### Polymer compound

A specific polymer compound comprised in the pigment composition of the present invention is a copolymer formed of a monomer represented by the following Formula (3) (also referred to as a "monomer A1" hereinafter), (meth)acrylic acid (also referred to as a "monomer B1" hereinafter) and benzyl (meth)acrylate (also referred to as a "monomer C1" hereinafter).

The specific polymer compound may exhibit excellent effect in dispersing the pigment by having the configuration formed by polymerizing at least these components.

The monomer represented by Formula (3) is described.

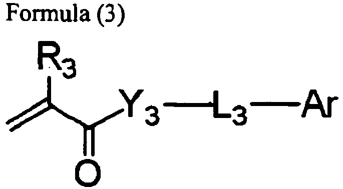

In Formula (3), R₃ represents a hydrogen atom or a methyl group. Y₃ represents an oxygen atom or -NR₄-. R₄ represents a hydrogen atom or a methyl group.

In Formula (3), L₃ represents a divalent linking group formed by combining two kinds or more selected from the group consisting of an alkylene group having 1 to 12 carbon atoms, -CO-, -NR₇- (R₇ is a hydrogen atom or an alkyl group having 1 to 6 carbon atoms) and -O-.

In Formula (3), Ar represents a monovalent group formed by removing at least one atom from naphthalene, biphenyl, acridone, fluorene, anthracene, phenanthrene or carbazole, and may further have a substituent. The position in the monovalent group represented by Ar from which the atom is removed is not particularly limited. Examples of the substituent include an alkyl group, an alkoxyl group, an alkylcarbonyl group, an alkylcarbonyloxy group, an alkyloxycarbonyloxy group, a halogen group and a cyano group, and more preferable examples of the substituent include an alkyl group having 1 to 10 carbon atoms, an alkoxyl group having 1 to 10 carbon atoms, an alkylcarbonyl group having 1 to 10 carbon atoms, an alkylcarbonyloxy group having 1 to 10 carbon atoms, a chloro group and a cyano group.

The substituent may be substituted with other substituents, in which case examples and preferable examples of the other substituents are also the same as those for the substituent. When Ar has two or more substituents, the substituents may be the same or different. The substituents may bond together to form a ring if possible.

Specific examples of the monomer (A1) represented by Formula (3) are shown below, while the invention is not limited thereto.

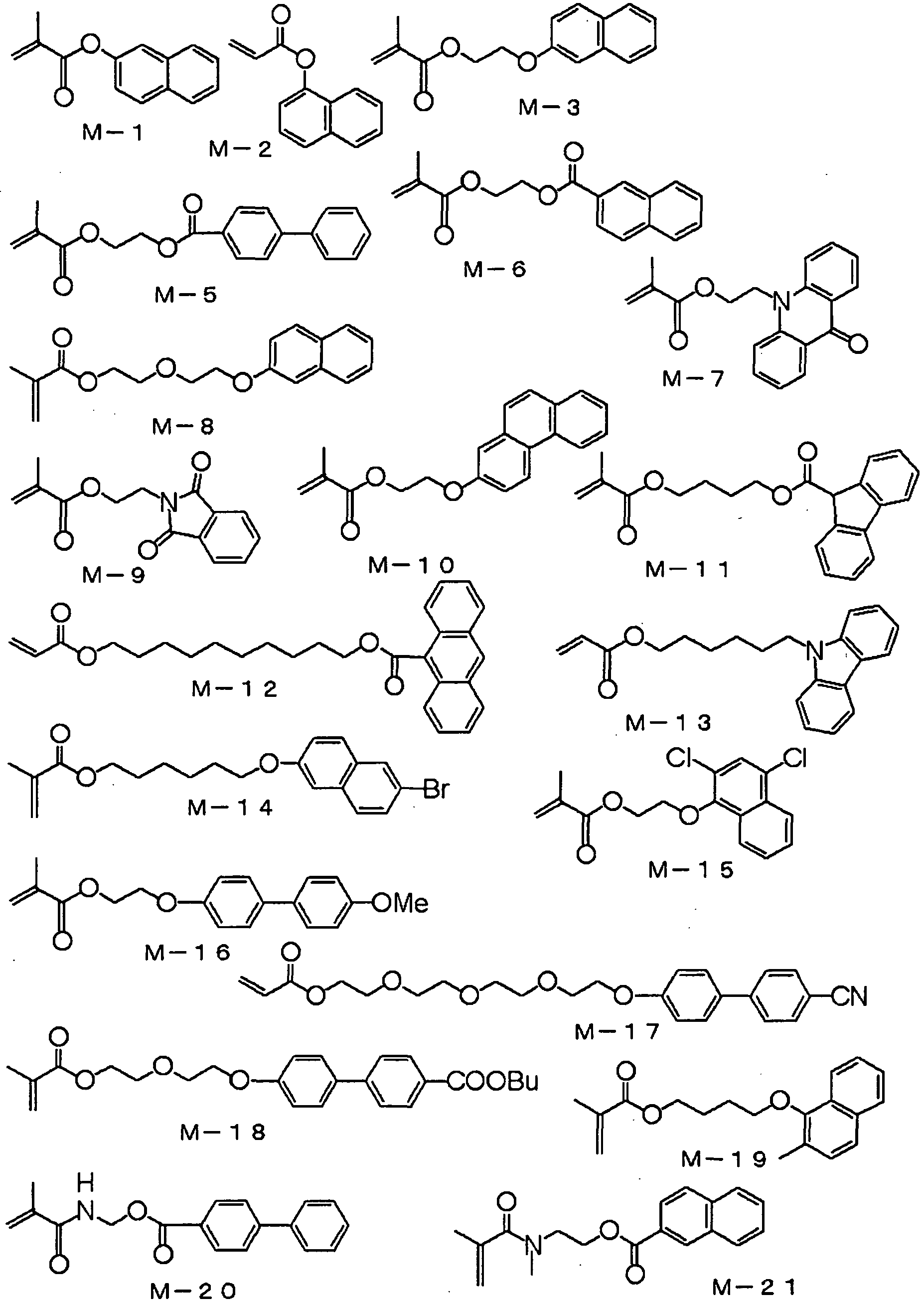

One embodiment of the specific polymer compound of the invention which is preferable from the viewpoint of dispersibility of the pigment is a copolymer formed of the monomer represented by Formula (3), the (meth)acrylic acid, the benzyl (meth)acrylate, and alkyl (meth)acrylate having 1 to 20 carbon atoms and/or (meth)acrylate having a polyalkyleneoxy chain. Herein, the alkyl (meth)acrylate having 1 to 20 carbon atoms may be referred to as "monomer D1" hereinafter. The (meth)acrylate having a polyalkyleneoxy chain may be referred to as "monomer D2" hereinafter. Further, the "alkyl (meth)acrylate having 1 to 20 carbon atoms and/or (meth)acrylate having a polyalkyleneoxy chain" may be referred to as "monomer D".

An alkyl group in the alkyl (meth)acrylate having 1 to 20 carbon atoms may be straight-chain, branched or alicyclic, and preferably has 1 to 18 carbon atoms are preferable, and more preferably has 1 to 12 carbon atoms.

An alkylene group in the (meth)acrylate having a polyalkyleneoxy chain preferably has 2 to 6 carbon atoms, and more preferably has 2 to 3 carbon atoms. The polymerization degree of polyoxyalkyleneoxy chain is preferably 1 to 100, and is more preferably 1 to 50.

The monomer A1 represented by Formula (3) may be used singly or by mixture of two kinds or more thereof.

The content of the monomer A1 in the specific polymer compound is preferably 5% to 60% by mass, more preferably 10% to 50% by mass, and particularly preferably 10% to 40% by mass, with respect to the total mass of the specific polymer compound.

The content of the monomer B1 in the specific polymer compound is preferably 3% to 20% by mass, more preferably 5% to 15% by mass, and particularly preferably 5% to 10% by mass, with respect to the total mass of the specific polymer compound.

The content of the monomer C1 in the specific polymer compound is preferably 20% to 92% by mass, more preferably 35% to 85% by mass, and particularly preferably 35% to 75% by mass, with respect to the total mass of the specific polymer compound.

The content of the monomer D1 in the specific polymer compound is preferably 5% to 40% by mass, and is more preferably 10% to 30% by mass, with respect to the total mass of the specific polymer compound.

The total of the content of the monomers B1 and the content of D2 is preferably 20% by mass or less, and is more preferably 15% by mass or less, with respect to the total mass of the specific polymer compound.

The contents is preferably set in the above ranges the for the reasons that orientation property to pigment may be improved, dissolution of the dispersant in water may be restrained, and the pigment may be covered with the dispersant so that a pigment composition having small particle diameter and excellent stability over time can be easily obtained.

The weight-average molecular weight of the specific polymer compound is preferably 10,000 to 200,000, more preferably 20,000 to 100,000, and further preferably 30,000 to 100,000 from the viewpoint of dispersibility of the pigment and dispersion stability of a pigment dispersion containing the specific polymer compound. The weight-average molecular weight is a value measured in terms of polystyrene (PS) by using gel permeation chromatography (GPC).

When the specific polymer compound is desired to be a ternary or more copolymer (copolymer with three or more components), the copolymer may be produced by a known polymerization method with the use of the monomer (A1), the monomer (B1) and the monomer (C1). When the specific polymer compound is desired to be a quaternary or more copolymer(copolymer with four or more components), the copolymer may be produced by further combining the monomer (D1) and/or the monomer (D2). The polymerization may be performed by combining other polymerizable monomers in addition to these monomers.

Specific examples of the specific polymer compound are shown below, while the specific polymer compound is not limited thereto.

| | | Mw | Mw/Mn |
|---|---|---|---|
| B-6 | 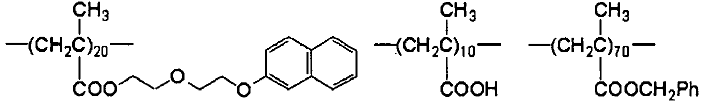 | 35000 | 2.08 |
| B-7 | 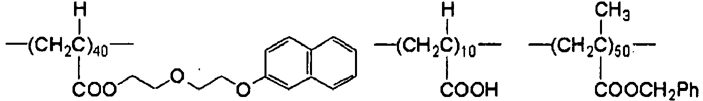 | 44600 | 2.02 |

| | | Mw | Mw/Mn |
|---|---|---|---|
| B-11 | 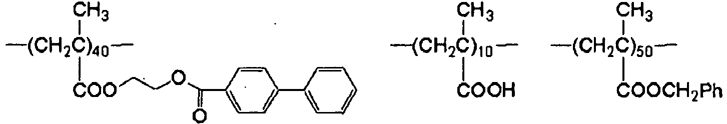 | 25900 | 3.21 |
| B-13 | 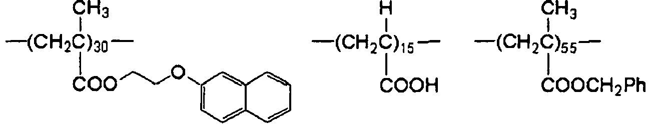 | 42500 | 2.38 |
| B-15 | 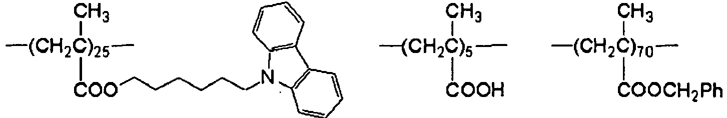 | 31200 | 2.16 |
| B-17 | 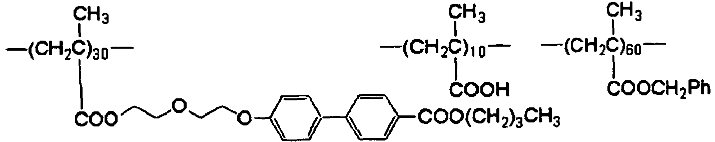 | 52000 | 2.45 |
| B-19 | 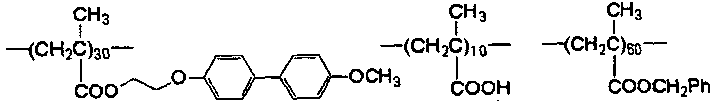 | 35000 | 2.08 |
| B-21 | 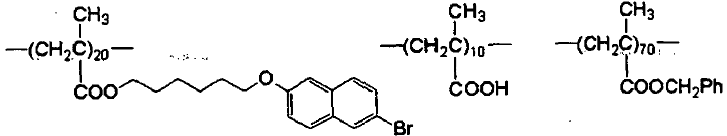 | 39600 | 2.76 |
| B-25 | 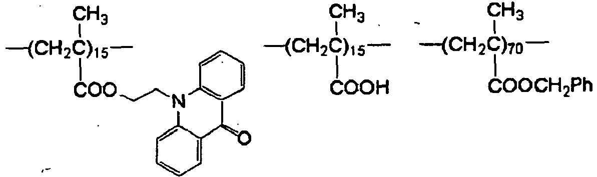 | 23500 | 2.32 |
| B-29 | 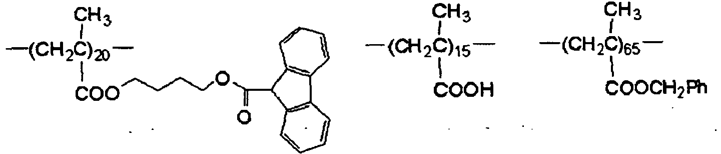 | 34000 | 2.05 |
| B-30 | 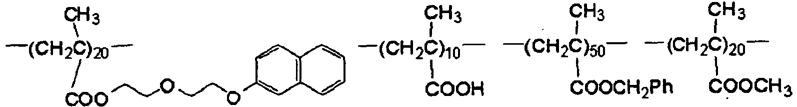 | 38300 | 2.04 |
| B-31 | 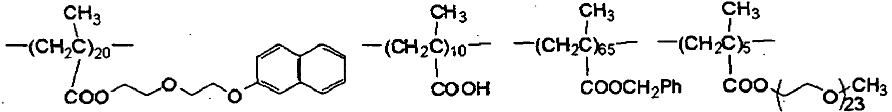 | 34000 | 2.15 |
| B-32 | 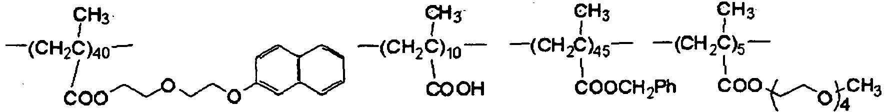 | 25100 | 1.58 |
| B-35 | 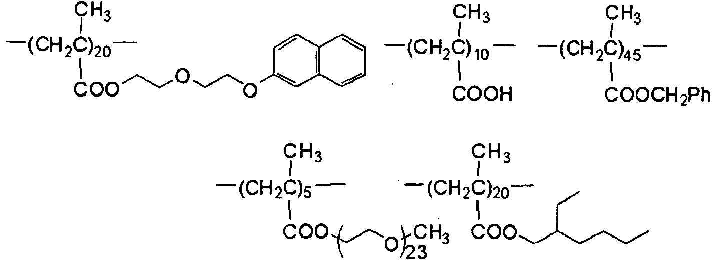 | 30900 | 1.85 |
| B-36 | 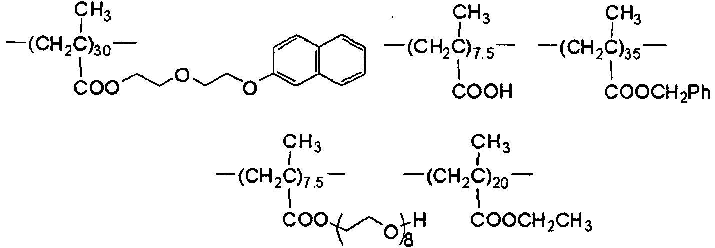 | 32300 | 2.02 |

The specific polymer compound may be appropriately used as a dispersant of the pigment in the pigment composition, the water-based pigment dispersion or the like. When the specific polymer compound is used as a dispersant for the pigment composition, the water-based pigment dispersion or the like, the pigment may be finely dispersed to make the pigment compositions being excellent in stability over time.

### EXAMPLES

The present invention is hereinafter described more specifically by referring to examples. However, the scope of the invention is not limited to the specific examples described below.

### Monomer Synthesis Example 1 (synthesis of M-3)

130 g of 2-hydroxyethyl methacrylate and 167 ml of triethylamine are added to 1000 ml of ethyl acetate and subjected to stirring at a temperature of 0°C for 30 minutes. 120 g of methanesulfonyl chloride is slowly dropped into the resultant solution and stirring is further performed at a temperature of 0°C for 3 hours. After the reaction, 500 ml of pure water is added to the obtained solution, and the resultant mixture is further stirred. An ethyl acetate layer is separated therefrom by using a separatory funnel, washed with a saturated sodium chloride aqueous solution, and dried by magnesium sulfate anhydride. Magnesium sulfate is removed therefrom by filtration to concentrate the solution, and 207 g of 2-methanesulfonyloxyethyl methacrylate is thereby obtained.

48 g of the thus-synthesized 2-methanesulfonyloxyethyl methacrylate, 30 g of 2-naphthol and 43 g of potassium carbonate are added to 200 ml ofN-methylpyrrolidone (NMP) and subjected to stirring at room temperature for 1 hour. The stirring is further performed at a temperature of 80°C for 10 hours. After the reaction, precipitated insoluble matters are removed therefrom by filtration, and thereafter 500 ml of ethyl acetate and 200 ml of pure water are added to the obtained solution, and the resultant mixture is further stirred. An ethyl acetate layer is separated, washed with a saturated sodium chloride aqueous solution, and dried by magnesium sulfate anhydride. Magnesium sulfate is removed therefrom by filtration, the solution is concentrated, and the solution is purified by chromatography on silica to provide 48 g of M-3.

### Monomer Synthesis Example 2 (synthesis of M-4)

65 g of 2-hydroxyethyl methacrylate, 104 ml of triethylamine and 3 g of dimethylaminopyridine are added to 500 ml of tetrahydrofuran (THF) and subjected to stirring at room temperature for 30 minutes. 167 g of triphenylmethylchloride is added to this solution and stirring is further performed at room temperature for 10 hours. After the reaction, 500 ml of ethyl acetate and 200 ml of pure water are added to the obtained solution and the resultant mixture is further stirred. An ethyl acetate layer is separated, washed with a saturated sodium chloride solution, and dried by magnesium sulfate anhydride. Magnesium sulfate is removed therefrom by filtration, the solution is concentrated, and the solution is purified by chromatography on silica to thereby provide 115 g of M-4.

### Monomer Synthesis Example 3 (synthesis of M-5)

30 g of 2-hydroxyethyl methacrylate and 40 ml of triethylamine are added to 500 ml of tetrahydrofuran (THF) and subjected to stirring at 0°C for 30 minutes. 50 g of biphenyl-4-carbonylchloride is added to this solution and stirring is further performed at 0°C for 3 hours. After the reaction, 500 ml of ethyl acetate and 200 ml of pure water are added to the obtained solution and the resultant mixture is further stirred. An ethyl acetate layer is separated by using a separatory funnel, washed with a saturated sodium chloride aqueous solution, and dried by magnesium sulfate anhydride. Magnesium sulfate is removed therefrom by filtration, the solution is concentrated, and the solution is purified by chromatography on silica to thereby provide 70 g of M-5.

### Monomer Synthesis Example 4 (synthesis of M-8)

144 g of 2-naphthol, 250 g of ethylene glycol mono-2-chloroethyl ether and 205 g of potassium carbonate are added to 1000 ml ofN-methylpyrrolidone (NMP) and subjected to stirring at room temperature for 1 hour. The stirring is further performed at a temperature of 110°C for 10 hours. After the reaction, the solution is cooled to room temperature and then 5000 ml of pure water is added to the obtained solution, and subjected to stirring at room temperature for 1 hour. The precipitated solid is recovered by filtration and dried under decompression conditions.

139 g of the thus-synthesized solid and 125 ml of triethylamine are added to 500 ml of THF and subjected to stirring at room temperature for 30 minutes. 75 g of methacryloyl chloride is slowly dropped into this solution and stirring is further performed at 0°C for 3 hours. After the reaction, 500 ml of ethyl acetate and 200 ml of pure water are added to the obtained solution and the resultant mixture is further stirred. An ethyl acetate layer is separated by using a separatory funnel, washed with a saturated sodium chloride solution, and dried by magnesium sulfate anhydride. Magnesium sulfate is removed therefrom by filtration, the solution is concentrated, and the solution is purified by chromatography on silica to thereby provide 174 g of M-8.

### Monomer Synthesis Example 5 (synthesis of M-9)

100 g of N-(2-hydroxyethyl)phthalimide and 93 g of triethylamine are added to 1500 ml of THF and subjected to stirring at room temperature for 30 minutes. 60 g of methacryloyl chloride is slowly dropped into this solution and stirring is further performed at 0°C for 3 hours. After the reaction, 1000 ml of ethyl acetate and 200 ml of pure water are added to the obtained solution and the resultant mixture is further stirred. An ethyl acetate layer is separated by using a separatory funnel, washed with a saturated sodium chloride solution, and dried by magnesium sulfate anhydride. Magnesium sulfate is removed therefrom by filtration, the solution is concentrated, and the solution is purified by chromatography on silica to thereby provide 113 g of M-9.

### Monomer Synthesis Example 6 (synthesis of mixture of M-25 and M-27)

9.76 parts of 9(10H)-acridone and 5.61 parts of tert-butoxypotassium are dissolved in 30 parts of dimethyl sulfoxide and heated to 45°C. 15.26 parts of chloromethylstyrene (CMS-P, manufactured by AGC SEIMI CHEMICAL CO., LTD., a mixture of meta-body/para-body in a ratio of 50/50 (mol/mol)) is dropped thereinto, and the resultant is further stirred while heated at 50°C for 5 hours. This reaction solution is poured into 200 parts of distilled water while being stirred, and the thus-obtained precipitate is recovered by filtration and washed to obtain 11.9 parts of a mixture of M-25 and M-27.

### Monomer Synthesis Example 7 (synthesis of mixture of M-28 and M-29)

355.0 g of 1,8-naphthalimide is dissolved in 1500 ml of N-methylpyrrolidone, and then 0.57 g of nitrobenzene is added thereto at 25°C, and 301.4 g of DBU (diazabicycloundecene) is further dropped thereinto. After stirring the resultant for 30 minutes, 412.1 g of chloromethylstyrene (CMS-P, manufactured by AGC SEIMI CHEMICAL CO., LTD., a mixture of meta-body/para-body in a ratio of 50/50 (mol/mol)) is dropped thereto, and stirring is further performed at 60°C for 4 hours. 2.7 L of isopropanol and 0.9 L of distilled water are added to this reaction solution, and stirring is further performed with cooling at 5°C. The thus-obtained precipitate is recovered by filtration and washed with 1.2 L of isopropanol to obtain 544.0 g of a mixture of M-28 and M-29.

### Synthesis Example 1 (synthesis of B-6)

60 g of methyl ethyl ketone is added to a 500-ml three-necked flask provided with a stirrer and a cooling pipe, and heating at a temperature of 72°C is performed under an atmosphere of nitrogen. A solution obtained by dissolving the monomer mixture containing 12 g of M-8, 6 g of methacrylic acid, and 42 g of benzyl methacrylate as shown in Table 1 and 0.64 g of dimethyl 2,2'-azobisisobutyrate in 30 g of methyl ethyl ketone is dripped into the three-necked flask over three hours. After finishing the dripping, a reaction in the flask is continued for another hour. Thereafter, a solution containing 0.3 g of dimethyl 2,2'-azobisisobutyrate dissolved in 10 g of methyl ethyl ketone is added thereto, and the resulnant is heated to 78°C and stirred while heated for 4 hours so as to react all unreacted monomers. The vanishment of unreacted monomers is confirmed by ¹H-NMR. The thus-obtained reaction solution is reprecipitated twice by using an excessive amount of hexane, and the precipitated polymer is dried to obtain 59 g of B-6.

The composition of the thus-obtained polymer is confirmed by ¹H-NMR to measure the weight-average molecular weight (Mw) by GPC.

### Synthesis Examples 2 to 7

The reaction for each of Synthesis Examples2 to 7 is performed in the same manner as Synthesis Example 1 except that the monomer mixture used for the reaction in Synthesis Example 1 is changed to the monomers described in Table 1 or 2 and the amount of the initiator (dimethyl 2,2'-azobisisobutyrate) is adjusted for the purpose of adjusting the molecular weight so that corresponding polymers (B-13, B-11, B-28, B-23, B-31 and B-35) are obtained. The composition of the obtained polymer is confirmed by ¹H-NMR to measure the weight-average molecular weight (Mw) by GPC.

### Synthesis Example 8 (synthesis of B-42)

90.9 g of methyl ethyl ketone and the monomer mixture containing 9 g of the mixture of M-25 and M-27, 11 g of methacrylic acid, 30 g of 2-phenoxyethylmethacrylate, and 50 g of methyl methacrylate as shown in Table 2 are added to a 500-ml three-necked flask provided with a stirrer and a cooling pipe, and heated to 75°C under an atmosphere of nitrogen. A solution obtained by dissolving 2.0 g of dimethyl 2,2'-azobisisobutyrate in 8.0 g of methyl ethyl ketone is added thereto, and a reaction is performed while maintaining 75°C for 2 hours. A solution in which 0.5 g of dimethyl 2,2'-azobisisobutyrate is dissolved in 1.0 g of methyl ethyl ketone is added thereto, and a reaction is performed for another 2 hours. A solution in which 0.5 g of dimethyl 2,2'-azobisisobutyrate is dissolved in 1.0 g of methyl ethyl ketone is further added thereto, and the resultant is heated to 78°C and stirred while heated for 4 hours so as to react all unreacted monomers. The vanishment of the unreacted monomers is confirmed by ¹H-NMR. The thus-obtained reaction solution is reprecipitated twice by using an excessive amount of hexane, and the precipitated polymer is dried to obtain 97 g of B-42.

The composition of the obtained polymer is confirmed by ¹H-NMR to measure the weight-average molecular weight (Mw) by GPC.

### Synthesis Examples 9 to 13

The reaction for each of Synthesis Examples 9 to 13 is performed in the same manner as Synthesis Example 8 except that the monomer mixture used for the reaction in Synthesis Example 1 is changed to the monomers described in Table 2 and the amount of the initiator (dimethyl 2,2'-azobisisobutyrate) is adjusted for the purpose of adjusting the molecular weight so that corresponding polymers (B-43, B-46, B-47, B-49 and B-53) are obtained. The composition of the obtained polymer is confirmed by ¹H-NMR to measure the weight-average molecular weight (Mw) by GPC.

**Table 1**

| Synthesis Example No. | Monomers | | Polymer |
|---|---|---|---|
| 1 | M-8 | 12 g | B-6 |
| | methacrylic acid | 6 g | |
| | benzyl methacrylate | 42 g | |
| 2 | M-3 | 18 g | B-13 |
| | methacrylic acid | 9 g | |
| | benzyl methacrylate | 33 g | |
| 3 | M-5 | 18 g | B-11 |
| | methacrylic acid | 6 g | |
| | benzyl methacrylate | 36 g | |
| 4 | M-4 | 30 g | B-28 |
| | methacrylic acid | 6 g | |
| | phenoxyethyl methacrylate | 24 g | |

**Table 2**

| Synthesis Example No. | Monomers | | Polymer |
|---|---|---|---|
| 5 | M-9 | 12 g | B-23 |
| | methacrylic acid | 4.5 g | |
| | benzyl methacrylate | 43.5 g | |
| 6 | M-8 | 12 g | B-31 |
| | methacrylic acid | 6 g | |
| | benzyl methacrylate | 39 g | |
| | *BLEMMER PME1000 | 3 g | |
| 7 | M-8 | 12 g | B-35 |
| | methacrylic acid | 6 g | |
| | benzyl methacrylate | 27 g | |
| | *BLEMMER PME1000 | 3 g | |
| | 2-ethylhexyl methacrylate | 12 g | |
| 8 | M-25/M-27 mixture | 9 g | B-42 |
| | methacrylic acid | 11 g | |
| | 2-phenoxyethyl methacrylate | 30 g | |
| | ethyl methacrylate | 50 g | |
| 9 | M-25/M-27 mixture | 15 g | B-43 |
| | methacrylic acid | 11 g | |
| | 2-phenoxyethyl methacrylate | 50 g | |
| | methyl methacrylate | 24 g | |
| 10 | M-28/M-29 mixture | 12 g | B-46 |
| | methacrylic acid | 7 g | |
| | 2-phenoxyethyl methacrylate | 30 g | |
| | ethyl methacrylate | 51 g | |
| 11 | M-28/M-29 mixture | 15 g | B-47 |
| | methacrylic acid | 12 g | |
| | 2-phenoxyethyl methacrylate | 25 g | |
| | methyl methacrylate | 48 g | |
| 12 | M-25/M-27 mixture | 18 g | B-49 |
| | methacrylic acid | 11 g | |
| | ethyl methacrylate | 71 g | |
| 13 | M-25/M-27 mixture | 15 g | B-53 |
| | methacrylic acid | 10 g | |
| | ethyl methacrylate | 75 g | |

| | | | |
|---|---|---|---|
| *BLEMMER PME1000 (trade name, manufactured by Nippon Oil & Fats Co., Ltd.) | | | |

### Example 1: Preparation of Pigment dispersion (D-1)

A pigment dispersion is prepared by the following procedures with the use of a Fritsch planetary ball mill model P-7 (trade name, manufactured by Fritsch Japan Co., Ltd.).

0.5 g of B-6 obtained by Synthesis Example 1 is dissolved in 4.5 g of MEK to prepare a methylethylketone (MEK) solution of a dispersant. 1.0 g of PB 15:3 pigment powder (phthalocyanine blue A220, manufactured by Dainichiseika Color & Chemicals Mfg. Co., Ltd.), 5.0 g of the MEK solution of B-6, and 0.6 g of 1N-sodium hydroxide aqueous solution (1 equivalent with respect to the amount of carboxylic acid contained in the dispersant) are added to a 45-ml vessel made of zirconia, to which ultrapure water is further added so that the sum of the contents in the vessel in mass becomes 15 g in total, and 40 g of 0.1-mmϕ zirconia beads (trade name: TORAYCERAM BEADS, manufactured by Toray Industries Inc.) is added thereto, and the resultant is lightly mixed by a spatula.

The 45-ml vessel made of zirconia is put in an overpot type special atmosphere control vessel, subjected to nitrogen substitution, and subjected to dispersing at the number of revolutions of 300 rpm for 3 hours. After finishing the dispersing, the beads are removed by filtering with filter cloth to obtain a pigment dispersion.

In addition, the MEK is removed from the pigment dispersion by reduced-pressure distillation. The pigment dispersion is then centrifuged at 5000 rpm for 30 minutes by a centrifugal separator (trade name: 05P-21, manufactured by Hitachi, Ltd.), and ion-exchange water is added to the resultant so that a pigment concentration of the resultant becomes 15% by mass. Then, after pressure filtration by using a 2.5-µm mesh membrane filter (manufactured by Advantec Co., Ltd.), ion-exchange water is added to the resultant so that pigment concentration thereof becomes 4% by mass. A pigment dispersion (D-1), that is an example of the invention, is thus obtained.

### Example 2: Preparation of Pigment dispersions (D-2) to (D-26)

Pigment dispersions (D-2) to (D-26) of the invention are prepared in the same manner as the preparation of the pigment dispersion (D-1) in Example 1, except that the amounts of the polymer B-6, the phthalocyanine blue A220 and the 1N-sodium hydroxide aqueous solution in Example 1 are changed as shown in Table 2.

### Example 3: Preparation of Water-based ink for ink-jet recording

A pigment dispersion-containing composition having the following formulation is prepared by using the pigment dispersion (D-1) and subjected to centrifugal separation (at 10000 to 20000 rpm for 30 minutes to 2 hours) to provide a water-based ink for ink-jet recording (J-1).

| | |
|---|---|
| pigment dispersion (D-1) | 40 parts by mass |
| glycerin | 7 parts by mass |
| diethylene glycol | 9 parts by mass |
| triethanolamine | 1 parts by mass |
| OLFINE E1010 (manufactured by Nissin Chemical Industry Co., Ltd.) | 1 parts by |

| | |
|---|---|
| | mass |
| triethylene glycol monobutyl ether | 9 parts by mass |
| ion-exchange water | 34 parts by mass |

When the pH of the ink (J-1) is measured by a pH meter (trade name: WM-50EG, manufactured by DKK-Toa Corpration), the pH is 8.5.

Inks for ink-jet recording (J-2) to (J-26) are prepared from each of the corresponding pigment dispersions (D-2) to (D-26) in the same manner as the ink (J-1).

### Comparative Example 1: Preparation of Pigment dispersions (D-27) to (D-29)

Pigment dispersions (D-27) to (D-29) are prepared in the same manner as the preparation of the pigment dispersion (D-1) in Example 1, except that B-6 in Example 1 is changed to the "copolymer P-30" in Synthesis Example 1 described in [0065] in JP-A No. 2007-51199, the "copolymer S10-80" in Synthesis Example 8 described in [0071] in JP-A No. 2007-51199, or the "dispersant 1" described on page 10 of Japanese Patent No. 2619255, respectively.

### Comparative Example 2: Preparation of Water-based ink for ink-jet recording

Water-based ink for ink-jet recording (J-27) and (J-28) are prepared in the same manner as Example 3, except that the pigment dispersions (D-27) or (D-28) is used in place of the pigment dispersion (D-1).

### Evaluations of Pigment dispersion

### (1) Measurement of Average particle diameter

The volume-average particle diameter of each of the pigment dispersion is measured by dynamic scattering method with the use of a nanotrack particle-size distribution measuring device (trade name: UPA-EX150, manufactured by Nikkiso Co., Ltd.). The results are shown in Table 3. A sample prepared by diluting 10 µl of the respective dispersion with 10 ml of water is subjected to the measurment at a temperature of 25°C. The evaluation conforms to the following criteria.
A: average particle diameter is less than 100 nm.
B: average particle diameter is 100 nm or more and less than 130 nm.
C: average particle diameter is 130 nm or more and less than 200 nm.
X: average particle diameter is 200 nm or more.

### (2) Stability of pigment dispersion over time

After each of the pigment dispersions is left in a state of hermetic sealing at a temperature of 60°C for 336 hours, coagulation and thickening of the pigment particles therein are evaluated on the basis of the following evaluation criteria by measuring the average particle diameter and the viscosity thereof. The results are shown in Table 3.
A: no coagulation and thickening of the pigment particles are observed at all.
B: no coagulation and thickening of the pigment particles are observed.
C: coagulation and thickening of the pigment particles are slightly observed while no practical problems are caused.
X: coagulation and thickening of the pigment particles are observed and practical problems are caused.

The average particle diameter is measured in the same manner as the (1). The viscosity is measured by the following procedures.

### (3) Measurement of Viscosity

The viscosity of each of the pigment dispersions is measured at a temperature of 25°C by using a viscometer (trade name: TV-22 type, manufactured by Toki Sangyo Co., Ltd.).

### Evaluations of Ink for ink-jet recording

### 1. Evaluation of print on Printed matter

A commercial ink-jet recording printer (trade name: PX-G930, manufactured by Seiko Epson Corp.) is used as an ink-jet recording device and filled with ink for each of the inks for ink-jet recording (J-1) and (J-25) to perform printing.

### 2. Measurement of Average particle diameter

The average particle diameter of each of the inks for ink-jet recording is measured and evaluated by the same process and the same evaluation criteria as the measurement of the average particle diameter of the pigment dispersion. The results are shown in Table 4.

### 3. Stability over time

After each of the inks is left in a state of hermetic sealing at a temperature of 60°C for 336 hours, coagulation and thickening of the pigment particles contained therein are - evaluated on the basis of the following evaluation criteria by observing change and viscosity of the particle size in the same manner as the measurement of the pigment dispersion. The results are shown in Table 4.
A: no coagulation and thickening of the pigment particles are observed at all.
B: coagulation and thickening of the pigment particles are slightly observed.
C: coagulation and thickening of the pigment particles are somewhat observed while no practical problems are caused.
X: coagulation and thickening of the pigment particles are observed and practical problems are caused.

The average particle diameter is measured in the same manner as the (1) measurement of average particle diameter for the evaluations of the pigment dispersion, and the viscosity is measured in the same manner as the (3) measurement of viscosity for the evaluations of the pigment dispersion.

### 4. Evaluation of Stability in Droplet ejection

The stability in droplet ejection is evaluated with respect to each of the inks by visually observing a state of ejection of droplets of ink through continuous ejection of ink droplets. The results are shown in Table 2. The evaluation conforms to the following criteria. The results are shown in Table 4.
A: no discharge failure is observed.
B: discharge failure is scarcely observed while no practical problems are caused.
C: discharge failure which is regarded as practical problem is observed
X: much discharge failure is observed.

**Table 3**

| Pigment dispersion | Polymer | Coloring agent (Pigments) | 1N-sodium hydroxide aqueous solution (g) | Average particle diameter | Stability over time | Remarks |
|---|---|---|---|---|---|---|
| D-1 | B-6 | A220 | 0.6 | A | A | The invention |
| D-2 | B-13 | A220 | 0.9 | B | B | The invention |
| D-3 | B-11 | A220 | 0.6 | A | B | The invention |
| D-4 | B-28 | A220 | 0.6 | B | B | The invention |
| D-5 | B-23 | A220 | 0.45 | A | B | The invention |
| D-6 | B-31 | A220 | 0.6 | A | A | The invention |
| D-7 | B-35 | A220 | 0.6 | A | A | The invention |
| D-8 | B-42 | A220 | 0.66 | A | A | The invention |
| D-9 | B-43 | A220 | 0.66 | A | A | The invention |
| D-10 | B-46 | A220 | 0.42 | A | A | The invention |
| D-11 | B-47 | A220 | 0.72 | A | A | The invention |
| D-12 | B-49 | A220 | 0.66 | A | A | The invention |
| D-13 | B-53 | A220 | 0.6 | A | A | The invention |
| D-14 | B-6 | PR122 | 0.6 | A | A | The invention |
| D-15 | B-42 | PR122 | 0.66 | A | A | The invention |
| D-16 | B-43 | PR122 | 0.66 | A | A | The invention |
| D-17 | B-46 | PR122 | 0.42 | A | A | The invention |
| D-18 | B-47 | PR122 | 0.72 | A | A | The invention |
| D-19 | B-49 | PR122 | 0.66 | A | A | The invention |
| D-20 | B-53 | PR122 | 0.6 | A | A | The invention |
| D-21 | B-6 | PY74 | 0.6 | B | B | The invention |
| D-22 | B-43 | PY74 | 0.66 | B | B | The invention |
| D-23 | B-47 | PY74 | 0.72 | B | B | The invention |
| D-24 | B-49 | PY74 | 0.72 | B | B | The invention |
| D-25 | B-53 | PR122 | 0.6 | B | B | The invention |
| D-26 | B-6 | carbon black | 0.6 | B | B | The invention |
| D-27 | P-30 | A220 | 0.28 | C | C | Comparative example |
| D-28 | S10-80 | A220 | 0.73 | C | C | Comparative example |
| D-29 | dispersant 1 | A220 | 0 | IND* | IND* | Comparative example |

| | | | | | | |
|---|---|---|---|---|---|---|
| IND*: Indispersible | | | | | | |

The coloring agents used in the Examples and the like are described below. PR122: C. I. Pigment Red 122 (trade name: CROMOPHTAL Jet Magenta DMQ, manufactured by Ciba Specialty Chemicals K.K.)
PY74: C. I. Pigment Yellow 74 (manufactured by Ciba Specialty Chemicals K.K.) Carbon black: carbon black (trade name: NIPEX 160-IQ, manufactured by Degussa)

**Table 4**

| Water-based ink | Used pigment dispersion | Average particle diameter | Stability over time | Stability in Droplet ejection | Note |
|---|---|---|---|---|---|
| J-1 | D-1 | A | A | B | the invention |
| J-2 | D-2 | B | B | B | the invention |
| J-3 | D-3 | A | B | B | the invention |
| J-4 | D-4 | B | B | B | the invention |
| J-5 | D-5 | A | B | B | the invention |
| J-6 | D-6 | A | A | B | the invention |
| J-7 | D-7 | A | A | B | the invention |
| J-8 | D-8 | A | A | B | the invention |
| J-9 | D-9 | A | A | B | the invention |
| J-10 | D-10 | A | A | B | the invention |
| J-11 | D-11 | A | A | B | the invention |
| J-12 | D-12 | A | A | B | the invention |
| J-13 | D-13 | A | A | B | the invention |
| J-14 | D-14 | A | A | B | the invention |
| J-15 | D-15 | A | A | B | the invention |
| J-16 | D-16 | A | A | B | the invention |
| J-17 | D-17 | A | A | B | the invention |
| J-18 | D-18 | A | A | B | the invention |
| J-19 | D-19 | A | A | B | the invention |
| J-20 | D-20 | A | A | B | the invention |
| J-21 | D-21 | B | B | B | the invention |
| J-22 | D-22 | B | B | B | the invention |
| J-23 | D-23 | B | B | B | the invention |
| J-24 | D-24 | B | B | B | the invention |
| J-25 | D-25 | B | B | B | the invention |
| J-26 | D-26 | B | B | B | the invention |
| J-27 | D-27 | C | C | C | Comparative example |
| J-28 | D-28 | C | C | C | Comparative example |

As is clearly understood from the Tables 3 and 4, the pigment dispersions (water-based coloring agent dispersions) of the invention have finely dispersed particle diameters of the pigment and favorable stability over time, while the pigment dispersions of comparative examples are inferior in any evaluated properties.

It is understood that the examples of the water-based ink of the invention offer favorable results in any of average particle diameter, stability over time and stability droplet ejection, while the water-based ink of comparative examples are inferior in any evaluated properties.

## Claims

1. A pigment composition comprising: a pigment and a dispersant, wherein the dispersant is a copolymer comprising a repeating unit (a) represented by the following Formula (1) and a repeating unit (b) having an ionic group: 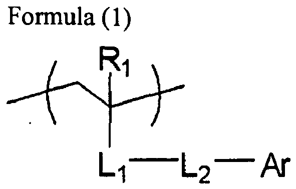 wherein, in Formula (1), R₁ represents a hydrogen atom or a methyl group; L₁ represents *-COO-, *-OCO-, *-CONH-, *-CONR₃-, or a substituted or unsubstituted phenylene group, where R₃ represents a hydrogen atom or an alkyl group having 1 to 6 carbon atoms; * represents a site which is linked to a main chain of the copolymer; L₂ represents a single bond, or a divalent linking group formed by combining one or more selected from the group consisting of an alkylene group having 1 to 12 carbon atoms, an alkenylene group having 2 to 12 carbon atoms, -CO-, -NR₇-, -O-, -S-, -SO- and -SO₂-, where R₇ represents a hydrogen atom or an alkyl group having 1 to 6 carbon atoms; and Ar represents a monovalent group formed by removing at least one atom from a condensed aromatic ring having 8 or more carbon atoms, a heterocycle having a condensed aromatic ring, or a structure having two or more connected benzene rings.

2. The pigment composition of claim 1, wherein L₁ in Formula (1) represents *-COO-, *-OCO-, or *-CONR₃-.

3. The pigment composition of claim 1, wherein Ar in Formula (1) represents a monovalent group formed by removing at least one atom from naphthalene, biphenyl, triphenylmethane, phthalimide, naphthalimide, acridone, fluorene, anthracene, phenanthrene, diphenylmethane or carbazole.

4. The pigment composition of claim 1, wherein the dispersant is a copolymer which further comprises a repeating unit (c) represented by the following Formula (2): 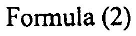 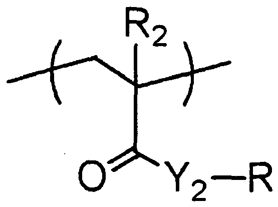 wherein, in Formula (2), R₂ represents a hydrogen atom or a methyl group; Y₂ represents an oxygen atom or -NR₃-; R₃ represents a hydrogen atom or an alkyl group having 1 to 6 carbon atoms; and R represents a straight-chain, branched or alicyclic alkyl group having 1 to 20 carbon atoms, or a phenyl group.

5. The pigment composition of claim 1, wherein the ionic group in the repeating unit (b) is formed of a monomer having an anionic group.

6. The pigment composition of claim 1, wherein the ionic group in the repeating unit (b) is formed of a monomer having a carboxyl group.

7. The pigment composition of claim 1, wherein the copolymer comprises, as copolymerization components, a monomer represented by the following Formula (3), (meth)acrylic acid, and benzyl (meth)acrylate: 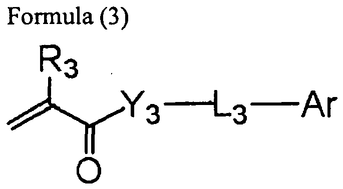 wherein, in Formula (3), R₃ represents a hydrogen atom or a methyl group; Y₃ represents an oxygen atom or -NR₄-; R₄ represents a hydrogen atom or a methyl group; L₃ represents a divalent linking group formed by combining two or more selected from the group consisting of an alkylene group having 1 to 12 carbon atoms, -CO-, -NR₇- and -O-, where R₇ is a hydrogen atom or an alkyl group having 1 to 6 carbon atoms; and Ar represents a monovalent group formed by removing at least one atom from naphthalene, biphenyl, acridone, fluorene, anthracene, phenanthrene or carbazole.

8. The pigment composition of claim 7, wherein the copolymer further comprises, as copolymerization components, at least one of alkyl (meth)acrylate having 1 to 20 carbon atoms and (meth)acrylate having a polyalkyleneoxy chain.

9. A water-based pigment dispersion comprising: the pigment composition of claim 1; and water or a water-based carrier medium comprising water and an organic solvent.

10. A method for producing the water-based pigment dispersion of claim 9 comprising:
mixing the dispersant, an organic solvent capable of dissolving the dispersant, and the water or the water-based carrier medium; and
removing the organic solvent capable of dissolving the dispersant from the resultant of the mixing.

11. A method for producing a water-based pigment dispersion comprising adding, to the pigment composition of claim 1, water or a water-based carrier medium comprising water and an organic solvent.

12. A water-based ink for ink jet recording comprising the water-based pigment dispersion of claim 9.

## Patentansprüche

1. Pigmentzusammensetzung, die ein Pigment und ein Dispergiermittel umfasst, wobei das Dispergiermittel ein Copolymer ist, das eine Repetiereinheit (a), die durch die folgende Formel (1) beschrieben wird, und eine Repetiereinheit (b), die eine ionische Gruppe hat, umfasst: 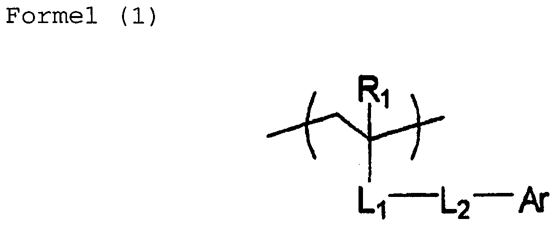 worin, in der Formel (1), R₁ ein Wasserstoffatom oder eine Methylgruppe ist; L₁ *-COO-, *-OCO-, *-CONH-, *-CONR₃- oder eine substituierte oder unsubstituierte Phenylengruppe ist, worin R₃ ein Wasserstoffatom oder eine Alkylgruppe mit 1 bis 6 Kohlenstoffatomen ist; * eine Stelle ist, die mit einer Hauptkette des Copolymers verknüpft ist; L₂ eine Einfachbindung oder eine divalente Verknüpfungsgruppe ist, die durch Kombination von einer oder mehreren Gruppen gebildet ist, die aus der Gruppe ausgewählt sind, die aus einer Alkylengruppe mit 1 bis 12 Kohlenstoffatomen, einer Alkenylengruppe mit 2 bis 12 Kohlenstoffatomen, -CO-, -NR₇-, -O-, -S-, -SO- und -SO₂- besteht, worin R₇ ein Wasserstoffatom oder eine Alkylgruppe mit 1 bis 6 Kohlenstoffatomen ist; und Ar eine monovalente Gruppe ist, die durch das Entfernen von mindestens einem Atom aus einem kondensierten aromatischen Ring mit 8 oder mehr Kohlenstoffatomen, einem Heterozyklus mit einem kondensierten aromatischen Ring, oder einer Struktur mit zwei oder mehreren verknüpften Benzolringen gebildet ist.

2. Pigmentzusammensetzung nach Anspruch 1, in der L₁ in der Formel (1) *-COO-, *-OCO- oder *-CONR₃- ist.

3. Pigmentzusammensetzung nach Anspruch 1, in der Ar in der Formel (1) eine monovalente Gruppe ist, die durch das Entfernen von mindestens einem Atom aus Naphthalin, Biphenyl, Triphenylmethan, Phthalimid, Naphthalimid, Acridon, Fluoren, Antracen, Phenanthren, Diphenylethan oder Carbazol gebildet ist.

4. Pigmentzusammensetzung nach Anspruch 1, in der das Dispergiermittel ein Copolymer ist, das ferner eine Repetiereinheit (c) umfasst, die durch die folgende Formel (2) beschrieben wird: 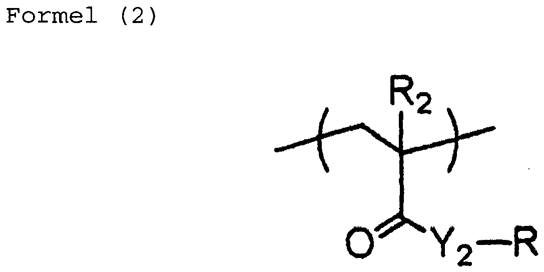 worin, in der Formel (2), R₂ ein Wasserstoffatom oder eine Methylgruppe ist; Y₂ ein Sauerstoffatom oder -NR₃-ist; R₃ ein Wasserstoffatom oder eine Alkylgruppe mit 1 bis 6 Kohlenstoffatomen ist; und R eine geradkettige, verzweigte oder alicyclische Alkylgruppe mit 1 bis 20 Kohlenstoffatomen oder eine Phenylgruppe ist.

5. Pigmentzusammensetzung nach Anspruch 1, in der die ionische Gruppe in der Repetiereinheit (b) aus einem Monomer mit einer anionischen Gruppe gebildet ist.

6. Pigmentzusammensetzung nach Anspruch 1, in der die ionische Gruppe in der Repetiereinheit (b) aus einem Monomer mit einer Carboxylgruppe gebildet ist.

7. Pigmentzusammensetzung nach Anspruch 1, in der das Copolymer als Copolymerisationskomponenten ein Monomer, das durch die folgende Formel (3) beschrieben wird, (Meth)acrylsäure und Benzyl(meth)acrylat umfasst: 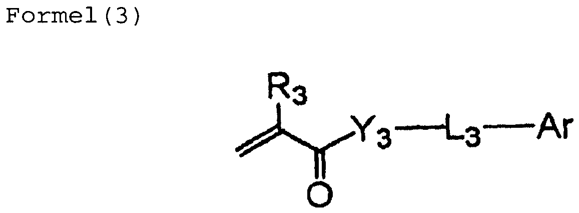 worin, in der Formel (3), R₃ ein Wasserstoffatom oder eine Methylgruppe ist; Y₃ ein Sauerstoffatom oder -NR₄-ist; R₄ ein Wasserstoffatom oder eine Methylgruppe ist; L₃ eine divalente Verknüpfungsgruppe ist, die durch Kombination von zwei oder mehreren Gruppen gebildet ist, die aus der Gruppe ausgewählt ist, die aus einer Alkylengruppe mit 1 bis 12 Kohlenstoffatomen, -CO-, -NR₇- und -O- besteht, wobei R₇ ein Wasserstoffatom oder eine Alkylgruppe mit 1 bis 6 Kohlenstoffatomen ist; und Ar eine monovalente Gruppe ist, die durch das Entfernen von mindestens einem Atom aus Naphthalin, Biphenyl, Acridon, Fluoren, Anthracen, Phenantren oder Carbazol gebildet ist.

8. Pigmentzusammensetzung nach Anspruch 7, in der das Copolymer als Copolymerisationskomponenten ferner mindestens ein Alkyl(meth)acrylat mit 1 bis 20 Kohlenstoffatomen und (Meth)acrylat mit einer Polyalkylenoxykette umfasst.

9. Wasserbasierte Pigmentdispersion, die die Pigmentzusammensetzung nach Anspruch 1 und Wasser oder ein wasserbasiertes Trägermedium umfasst, das Wasser und ein organisches Lösungsmittel umfasst.

10. Verfahren zur Herstellung der wasserbasierten Pigmentdispersion nach Anspruch 9, das folgendes umfasst:
Vermischen des Dispergiermittels, eines organischen Lösungsmittels, das zum Auflösen des Dispergiermittels geeignet ist, und des Wassers oder des wasserbasierten Trägermediums; und
Entfernen des organischen Lösungsmittels, das zum Auflösen des Dispergiermittels geeignet ist, aus dem resultierenden Gemisch.

11. Verfahren zur Herstellung einer wasserbasierten Pigmentdispersion, bei dem zu der Pigmentdispersion nach Anspruch 1 Wasser oder ein wasserbasiertes Trägermedium, das Wasser und ein organisches Lösungsmittel enthält, zugegeben wird.

12. Wasserbasierte Tinte für die Tintenstrahlaufzeichnung, die die wasserbasierte Pigmentdispersion nach Anspruch 9 umfasst.

## Revendications

1. Composition de pigment comprenant : un pigment et un dispersant, dans laquelle le dispersant est un copolymère comprenant un motif répété (a) représenté par la Formule (1) suivante et un motif répété (b) ayant un groupe ionique : 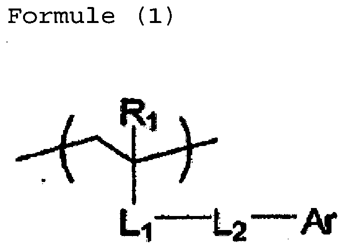 dans laquelle, dans la Formule (1), R₁ représente un atome d'hydrogène ou un groupe méthyle ; L₁ représente *-COO-, *-OCO-, *-CONH-, *-CONR₃-, ou un groupe phénylène substitué ou non substitué, où R₃ représente un atome d'hydrogène ou un groupe alkyle ayant 1 à 6 atomes de carbone ; * représente un site qui est lié à une chaîne principale du copolymère ; L₂ représente une liaison simple, ou un groupe de liaison divalent formé en combinant un ou plusieurs choisi(s) parmi le groupe consistant en un groupe alkylène ayant 1 à 12 atomes de carbone, un groupe alcénylène ayant 2 à 12 atomes de carbone, -CO-, -NR₇-, -O-, -S-, -SO-et -SO₂-, où R₇ représente un atome d'hydrogène ou un groupe alkyle ayant 1 à 6 atomes de carbone ; et Ar représente un groupe monovalent formé en enlevant au moins un atome d'un cycle aromatique condensé ayant 8 atomes de carbone ou plus, d'un hétérocycle ayant un cycle aromatique condensé, ou d'une structure ayant deux cycles benzène connectés ou plus.

2. Composition de pigment selon la revendication 1, dans laquelle L₁ dans la Formule (1) représente *-COO-, *-OCO-, ou * -CONR₃-.

3. Composition de pigment selon la revendication 1, dans laquelle Ar dans la Formule (1) représente un groupe monovalent formé en enlevant au moins un atome d'un naphtalène, d'un biphényle, d'un triphénylméthane, d'un phtalimide, d'un naphtalimide, d'une acridone, d'un fluorène, d'un anthracène, d'un phénanthrène, d'un diphénylméthane ou d'un carbazole.

4. Composition de pigment selon la revendication 1, dans laquelle le dispersant est un copolymère qui comprend en outre un motif répété (c) représenté par la Formule (2) suivante : 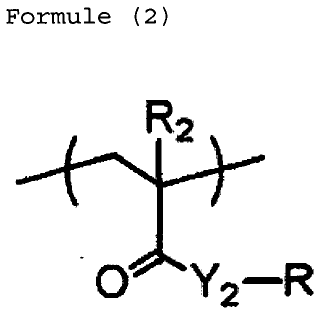 dans laquelle, dans la Formule (2), R₂ représente un atome d'hydrogène ou un groupe méthyle ; Y₂ représente un atome d'oxygène ou -NR₃- ; R₃ représente un atome d'hydrogène ou un groupe alkyle ayant 1 à 6 atomes de carbone ; et R représente un groupe alkyle à chaîne droite, ramifié ou alicyclique ayant 1 à 20 atomes de carbone, ou un groupe phényle.

5. Composition de pigment selon la revendication 1, dans laquelle le groupe ionique dans le motif répété (b) est constitué d'un monomère ayant un groupe anionique.

6. Composition de pigment selon la revendication 1, dans laquelle le groupe ionique dans le motif répété (b) est constitué d'un monomère ayant un groupe carboxyle.

7. Composition de pigment selon la revendication 1, dans laquelle le copolymère comprend, comme composants de copolymérisation, un monomère représenté par la Formule (3) suivante, un acide (méth)acrylique, et un (méth)acrylate de benzyle : 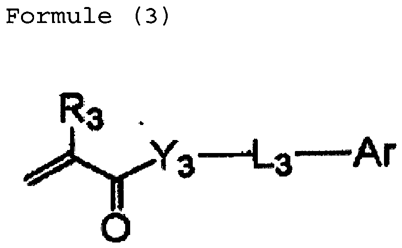 dans laquelle, dans la Formule (3), R₃ représente un atome d'hydrogène ou un groupe méthyle ; Y₃ représente un atome d'oxygène ou -NR₄- ; R₄ représente un atome d'hydrogène ou un groupe méthyle ; L₃ représente un groupe de liaison divalent formé en combinant deux ou plus parmi le groupe consistant en un groupe alkylène ayant 1 à 12 atomes de carbone, -CO-, NR₇- et -O-, où R₇ est un atome d'hydrogène ou un groupe alkyle ayant 1 à 6 atomes de carbone ; et Ar représente un groupe monovalent formé en enlevant au moins un atome d'un naphtalène, d'un biphényle, d'une acridone, d'un fluorène, d'un anthracène, d'un phénanthrène ou d'un carbazole.

8. Composition de pigment selon la revendication 7, dans laquelle le copolymère comprend en outre, comme composants de copolymérisation, au moins un parmi un (méth)acrylate d'alkyle ayant 1 à 20 atomes de carbone et un (méth)acrylate ayant une chaîne polyalkylèneoxy.

9. Dispersion de pigment à base aqueuse comprenant : la composition de pigment selon la revendication 1 ; et de l'eau ou un milieu support à base aqueuse comprenant de l'eau et un solvant organique.

10. Procédé de production de la dispersion de pigment à base aqueuse selon la revendication 9 comprenant :
le mélange du dispersant, d'un solvant organique apte à dissoudre le dispersant, et de l'eau ou du milieu support à base aqueuse ; et
l'élimination du solvant organique apte à dissoudre le dispersant du résultat du mélange.

11. Procédé de production d'une dispersion de pigment à base aqueuse comprenant l'ajout, à la composition de pigment selon la revendication 1, d'eau ou d'un milieu support à base aqueuse comprenant de l'eau et un solvant organique.

12. Encre à base aqueuse pour un enregistrement par jet d'encre comprenant la dispersion de pigment à base aqueuse selon la revendication 9.
